(19) Europäisches Patentamt
European Patent Office
Office européen des brevets

(11) **EP 2 154 186 B1**

(12) **EUROPEAN PATENT SPECIFICATION**

(45) Date of publication and mention
of the grant of the patent:
**18.09.2019   Bulletin 2019/38**

(51) Int Cl.:
*C08J 9/36* (2006.01)     *C04B 35/632* (2006.01)
*C08F 8/00* (2006.01)     *C09D 5/03* (2006.01)
*C09D 129/14* (2006.01)     *C09D 163/00* (2006.01)
*C09D 175/10* (2006.01)     *C08F 8/14* (2006.01)
*C08F 8/46* (2006.01)     *C04B 35/468* (2006.01)
*C04B 35/634* (2006.01)     *C08G 18/62* (2006.01)
*C08J 3/24* (2006.01)     *C08J 3/28* (2006.01)
*C08F 8/28* (2006.01)

(21) Application number: **08764476.1**

(22) Date of filing: **21.05.2008**

(86) International application number:
**PCT/JP2008/059353**

(87) International publication number:
**WO 2008/143286 (27.11.2008 Gazette 2008/48)**

(54) **CROSSLINKABLE POLYVINYL ACETAL POROUS POWDER, METHOD FOR PRODUCING THE SAME, AND USE OF THE SAME**

VERNETZBARES PORÖSES POLYVINYLACETALPULVER, VERFAHREN ZU DESSEN HERSTELLUNG UND VERWENDUNG

POUDRE POREUSE D'ACÉTAL POLYVINYLIQUE RÉTICULABLE, SON PROCÉDÉ DE FABRICATION ET SON UTILISATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.05.2007   JP 2007134397**
**21.05.2007   JP 2007134398**
**21.05.2007   JP 2007134399**

(43) Date of publication of application:
**17.02.2010   Bulletin 2010/07**

(73) Proprietor: **Kuraray Co., Ltd.**
**Okayama 710-0801 (JP)**

(72) Inventors:
• **ASANUMA, Yoshiaki**
**Kurashiki-shi**
**Okayama 713-8550 (JP)**

• **ISOUE, Koichiro**
**Kurashiki-shi**
**Okayama 713-8550 (JP)**

(74) Representative: **Cabinet Beau de Loménie et al**
**158, rue de l'Université**
**75340 Paris Cedex 07 (FR)**

(56) References cited:
EP-A2- 0 311 381     JP-A- 04 248 875
JP-A- 50 129 657     JP-A- 2003 226 714
JP-A- 2006 241 332     JP-A- 2006 282 490
JP-A- 2007 177 211     US-A- 2 413 275
US-A- 5 055 518     US-A1- 2006 170 136

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a crosslinkable polyvinyl acetal porous powder, and a method for producing the same, and use of the same. The crosslinkable polyvinyl acetal porous powder can form a cured product having an excellent solvent resistance by being subjected to photoirradiation such as ultraviolet ray (UV) irradiation, electron beam irradiation, thermal treatment, and the like.

BACKGROUND ART

Polyvinyl acetal such as polyvinyl butyral is excellent in adhesion to various organic/inorganic substrates, compatibility, and solubility in organic solvents, and thus widely used as adhesives, ceramic binders, inks, paints, interlayer films for building/automotive safety glass, and the like.

Meanwhile, studies have been made for improving functions of polyvinyl acetal, and particularly, a broad range of studies on crosslinking techniques have been made for improving adhesion and solvent resistance thereof. In order to provide crosslinkability to polyvinyl acetal, there have been known various methods for introducing a crosslinkable functional group into polyvinyl acetal. As typical examples, there are methods such as (1) a method in which a hydroxyl group in polyvinyl alcohol, and an unsaturated carboxylic acid compound or its derivative are esterified, followed by acetalization, (2) a method in which polyvinyl acetal having a carboxyl group or a carboxylate group, and an epoxy compound having an ethylenically unsaturated group are reacted (the carboxylate group herein means a group in which a proton of a carboxyl group is substituted with a monovalent or polyvalent metal ion, or a cation such as various ammonium ions), (3) a method in which a residual hydroxyl group in polyvinyl acetal, and an epoxy compound having an ethylenically unsaturated group are reacted, and (4) a method in which a residual hydroxyl group in polyvinyl acetal, and an isocyanate compound having an ethylenically unsaturated group are reacted.

In the above-mentioned method (1), conventionally, polyvinyl alcohol and an unsaturated carboxylic acid are reacted in an aqueous solution to cause dehydration and esterification, and then it is acetalized with an aldehyde compound, so that crosslinkable polyvinyl acetal is obtained (e.g. JP 60(1985)-8043 B, and JP 60(1985)-30331 B). In this method, the reaction efficiency is very low because the dehydration esterification reaction with an unsaturated carboxylic acid is carried out in an aqueous solution. Therefore, an excess amount of the unsaturated carboxylic acid is necessary to achieve crosslinkable polyvinyl acetal with satisfactory performance. However, use of a large amount of the unsaturated carboxylic acid leads to an increase in the production cost. Further, in view of preventing environmental pollution, it is not preferable because the use thereof leads to an increase of load in the liquid waste treatment after the reaction. If a reduced amount of the unsaturated carboxylic acid is used in order to avoid these problems, the modification rate of the polyvinyl acetal by the unsaturated carboxylic acid is not sufficiently high, and thus sufficient solvent resistance cannot be achieved in a cured product obtained from the crosslinkable polyvinyl acetal that has been synthesized using this method.

In the above-mentioned method (2), conventionally, a carboxyl group-containing polyvinyl acetal obtained by acetalizing a carboxyl group-containing polyvinyl alcohol with an aldehyde compound is dissolved in an organic solvent, followed by reaction with glycidyl methacrylate, so that crosslinkable polyvinyl acetal is obtained (e.g. JP 60(1985)-30331 B). However, the crosslinkable polyvinyl acetal obtained using the method contains a large amount of unreacted glycidyl methacrylate and by-produced low molecular compounds. Therefore, it is not preferable in view of ensuring safety to the human body, or environmental protection. Further, even if this composition is subjected to UV irradiation, electron beam irradiation, or thermal treatment, it is difficult to achieve a cured product with sufficiently high solvent resistance. This will be seen also from the after-mentioned comparative examples.

In the above-mentioned method (3) or (4), conventionally, the residual hydroxyl group in polyvinyl acetal, and a compound including an ethylenically unsaturated group (crosslinkable group) and an epoxy group in its molecule or a compound including an ethylenically unsaturated group (crosslinkable group) and an isocyanate group in its molecule are dissolved in a solvent and reacted uniformly, so that a crosslinkable polyvinyl acetal composition is obtained (e.g. JP 2004-339370 A). However, the crosslinkable polyvinyl acetal composition obtained using this method contains a large amount of the residual components (unreacted compounds, by-products, catalysts or the like) derived from the compound that has been used for the modification of the polyvinyl acetal. Therefore, it is not preferable in view of ensuring safety to the human body, or environmental protection. Further, since such residual components inhibit the crosslinking reaction of the crosslinkable polyvinyl acetal, a cured product with sufficiently high solvent resistance is difficult to obtain by UV irradiation, electron beam irradiation, or thermal treatment, as seen also from the after-mentioned comparative examples.

There is also known a method in which polyvinyl acetal is reacted with a compound having an ethylenically unsaturated group (crosslinkable group) and an epoxy group in a homogeneous solution, thereby allowing a homogeneous solution of crosslinkable polyvinyl acetal to be obtained. Thereafter, the solution is dropped in a poor solvent, so that crosslinkable polyvinyl acetal precipitates are obtained (e.g. JP 2004-269690 A). However, not only this process for obtaining the precipitates itself is inefficient, but also such precipitates have insufficient solvent solubility, as seen also from the after-mentioned comparative examples. It is not preferable in view of workability.

Other than the above, there has been known a method for producing crosslinkable polyvinyl acetal in which polyvinyl acetal is dissolved in an organic solvent and reacted with an unsaturated carboxylic acid anhydride, an unsaturated carboxylic acid chloride or the like, and an appropriate crosslinking initiator is added to the thus obtained homogeneous solution as a crude product, so that it is used as a curable composition as it is (e.g. JP 9(1997)-249712 A, and JP10(1998)-292013 A), or a method in which the thus obtained homogeneous solution as a crude product is dropped into a large amount of a poor solvent of polyvinyl acetal, so that precipitates of the crosslinkable polyvinyl acetal are obtained (e.g. JP 1(1989)-198605 A, and JP 5(1993)-39335 A). However, the curable composition to be obtained by the former method contains a large amount of the residual components (unreacted compounds, by-products, catalysts or the like) that are derived from the compound used for the modification of the polyvinyl acetal. Therefore, it is not preferable to use the composition for various applications in view of ensuring safety to the human body, or environmental protection. Further, since the residual components inhibit the crosslinking reaction of the crosslinkable polyvinyl acetal, a cured product with sufficiently high solvent resistance is difficult to obtain by UV irradiation, electron beam irradiation, thermal treatment, or the like. Meanwhile, in the latter method, not only the process for obtaining the precipitates of crosslinkable polyvinyl acetal itself is inefficient, but also such precipitates to be obtained have insufficient solvent solubility. Therefore, it is not preferable in view of workability.

US2413275 discloses the preparation of a modified polyvinyl acetal by treating a solid polyvinyl alcohol with maleic acid or its equivalent anhydride and an aldehyde simultaneously. The process is carried out in the presence of a volatile liquid which is a non solvent for the polyvinyl alcohol and for the resulting acetal.

US5055518 discloses ethylenically unsaturated carbamates of polyvinyl acetals prepared by the reaction of the copolymers with unsaturated isocyanates which are used in use in radiation-curable coating compositions.

US2006/0170136 discloses acetoacetylated polyvinyl acetal polymers. Example 1 discloses the reaction of a polyvinyl butyral with t-butylacetoacetate which is carried out in solution, the solvent being methyl ethyl ketone. The final product is washed and dried.

As to the solvent resistance of cured products, an improvement has been desired particularly in ceramic green sheets and polyvinyl acetal powder coatings among the applications of the polyvinyl acetal powder. For example, a green sheet is produced from a slurry prepared by mixing electrically conductive metal oxide particles, polyvinyl acetal as a binder and an organic solvent, and after printing a circuit on its surface, the green sheet is calcinated, so that a ceramic circuit board is obtained (e.g. JP 2005-275071 A). However, in printing the circuit on the surface of the green sheet, a part of the polyvinyl butyral is dissolved undesirably in an organic solvent (that is a solvent in the conductor paste to be used in printing the circuit). This constitutes a problem.

DISCLOSURE OF THE INVENTION

It is an object of the present invention to solve the above-mentioned problems of the conventional techniques and to provide a crosslinkable polyvinyl acetal porous powder that can form a cured product with excellent solvent resistance by being subjected to photoirradiation, electron beam irradiation, thermal treatment, and that has excellent washability and solvent solubility.

It is another object of the present invention to provide a ceramic green sheet with excellent solvent resistance, a binder and a ceramic composition to be used therefor, using the polyvinyl acetal powder.

It is still another object of the present invention to provide a crosslinkable polyvinyl acetal powder coating capable of forming a coating film with excellent solvent resistance.

According to the present invention, which has achieved the above-described object, the crosslinkable polyvinyl acetal porous powder is provided, including crosslinkable polyvinyl acetal containing a monomer unit having a crosslinkable functional group bonded thereto through at least one bond selected from the group consisting of an ester bond, an ether bond and an urethane bond, and having the content of the crosslinkable functional group of 0.3 to 20 mol% with respect to the total of $-CH_2-CH-$ units in the main chain of polyvinyl acetal, wherein the crosslinkable polyvinyl acetal porous powder is formed of aggregated particles (secondary particles) in which primary particles agglomerate, and the crosslinkable polyvinyl acetal porous powder has an average particle size of the secondary particles of 30 to 10000 $\mu$m determined by a measurement using a laser diffraction method and a bulk density of 0.12 to 0.50 g/mL determined based on JIS K6721.

The above-described object is achieved suitably by the crosslinkable polyvinyl acetal porous powder formed by aggregated particles (secondary particles) that each are formed by agglomerating primary particles, particularly suitably, by the crosslinkable polyvinyl acetal porous powder formed by the aggregated particles (secondary particles) of the primary particles having an average particle size of 10 $\mu$m or less.

According to the present invention, there is also provided a method for producing a crosslinkable polyvinyl acetal porous powder that includes reacting a polyvinyl acetal porous powder that may have a carboxyl group and/or carboxylate group with a compound having a crosslinkable functional group.

In the method, the reaction is carried out in the state where the polyvinyl acetal porous powder is dispersed in a solvent in which the compound having a crosslinkable functional group is soluble but the polyvinyl acetal porous powder and the crosslinkable polyvinyl acetal porous powder are insoluble, and the acetalization degree of the polyvinyl acetal porous powder is 40 to 85 mol%.

According to the present invention, a crosslinkable polyvinyl acetal porous powder can be achieved that can form a cured product with excellent solvent resistance by being subjected to photoirradiation such as UV irradiation, electron beam irradiation, thermal treatment or the like, and that has excellent washability and solvent solubility.

The term, " excellent solvent resistance", herein means that a cured product obtained by being subjected to UV irradiation, electron beam irradiation, thermal treatment, or the like is insoluble or hardly soluble in a solvent in which polyvinyl acetal porous powder is soluble, such as ethanol, propanol, butanol, methyl ethyl ketone, dioxane, tetrahydrofuran, ethyl acetate, chloroform, dimethyl formamide, and dimethyl sulfoxide.

The term, "excellent solvent solubility", herein means that the crosslinkable polyvinyl acetal porous powder can be dissolved quickly and easily in a solvent in which the polyvinyl acetal porous powder is soluble, such as ethanol, propanol, butanol, methyl ethyl ketone, dioxane, tetrahydrofuran, ethyl acetate, chloroform, dimethyl formamide, and dimethyl sulfoxide.

The term, "excellent washability", herein means that purification of the crosslinkable polyvinyl acetal porous powder after reaction is easy, and the residual components after the reaction can be removed easily by washing several times.

According to another aspect of the present invention, a crosslinkable ceramic binder containing the crosslinkable polyvinyl acetal porous powder is provided.

According to another aspect of the present invention, a thermally-crosslinkable ceramic composition containing the crosslinkable polyvinyl acetal porous powder is provided. According to another aspect of the present invention, a thermally-crosslinkable ceramic green sheet obtained from the thermally-crosslinkable ceramic composition is provided. According to another aspect of the present invention, a thermally-crosslinked ceramic green sheet obtained by thermal treatment of the thermally-crosslinkable ceramic green sheet is provided.

According to another aspect of the present invention, a photo-crosslinkable ceramic composition containing the crosslinkable polyvinyl acetal porous powder is provided. According to another aspect of the present invention, a photo-crosslinkable ceramic green sheet obtained from the photo-crosslinkable ceramic composition is provided. According to another aspect of the present invention, a photo-crosslinked ceramic green sheet obtained by light irradiation treatment of the photo-crosslinkable ceramic green sheet is provided.

It is advantageous to use the crosslinkable polyvinyl acetal porous powder of the present invention for a crosslinkable ceramic binder. In the case of using this in preparing a thermally-crosslinkable ceramic composition or photo-crosslinkable ceramic composition and obtaining a ceramic green sheet, the obtained green sheet has high solvent resistance. Therefore, when printing a circuit on the surface of the green sheet, printing is very clear and free from defects such as pinholes caused by dissolving of the green sheet.

According to still another aspect of the present invention, a crosslinkable powder coating containing the crosslinkable polyvinyl acetal porous powder is provided. By using the crosslinkable powder coating of the present invention for coating, followed by photoirradiation, thermal treatment, or the like, a crosslinked structure is formed between the molecules of a polyvinyl acetal resin. As a result, a coating film having high solvent resistance can be obtained.

BEST MODE FOR CARRYING OUT THE INVENTION

In the present invention, a crosslinkable functional group may function to cause crosslinking by reacting with the residual hydroxyl group included in the crosslinkable polyvinyl acetal porous powder, or may function to cause crosslinking by reacting with the other crosslinkable functional group. It may be a group capable of crosslinking by reacting with a polyfunctional crosslinking agent. The crosslinkable functional group is generally introduced by reacting polyvinyl acetal with a compound having a crosslinkable functional group. Preferable examples of the crosslinkable functional group include a functional group having an ethylenically unsaturated bond, a functional group having a carboxyl group, and a functional group having a carboxylate group. Other examples of the crosslinkable functional group include, as a group in which crosslinking proceeds via addition reaction or substitution reaction with the residual hydroxyl group in the polyvinyl acetal, a functional group having an ester bond introduced by reaction with, for example, adipic acid monomethyl ester chloride, a functional group having a carboxylic acid chloride group introduced by reaction with, for example, adipoyl dichloride, a functional group having an acid anhydride group introduced by reaction with, for example, 1,2,3,4-cyclopentane tetracarboxylic acid dianhydride, a functional group having an alkyl halide group introduced by reaction with, for example, 4-chlorobutyryl chloride, a functional group having an isocyanate group introduced by reaction with, for example, N-chlorocarbonyl isocyanate, a functional group having an acetylenically unsaturated bond introduced by reaction with, for example, propiolic acid chloride (in which the crosslinking may proceed through radical reaction, too), a functional group having an epoxy group, a functional group having a ketone group, a functional group having an aldehyde group, and a functional group having a dialkyl acetal group. In addition, examples thereof include a group in which the crosslinking proceeds via cycloaddition reaction, such as a functional group having a furanyl group introduced by reaction of the residual hydroxyl group in the polyvinyl acetal with, for example, 2-furancarboxylic acid chloride, and a functional group having a cyclopentadienyl group. Still other examples thereof include, as a group capable of crosslinking by reaction with a polyfunctional crosslinking agent, a functional group having a primary hydroxyl group introduced by reaction of the residual hydroxyl group in the polyvinyl acetal with, for example, an ethylene oxide, a functional group having an amino group introduced by reaction of the residual hydroxyl group in the polyvinyl acetal with, for example, epsilon-caprolactam, a functional group having a thiol group introduced by reaction with, for example, gamma-thiobutyrolactone, and a functional group having an acetoacetyl group introduced by reaction with, for example, diketene. Two or more kinds of the groups may be introduced as a crosslinkable functional group into the crosslinkable polyvinyl acetal.

It should be noted that the term, "an ethylenically unsaturated bond", above means a carbon-carbon double bond in which 2 carbon atoms are bonded with 2 valence bonds. As the functional group having an ethylenically unsaturated bond, a vinyl group, a methylvinyl group, a styryl group, a carboxyvinyl group, a (meth)acryloyloxy $C_{1-6}$ alkyl group (e.g. 2-(meth)acryloyloxyethyl group), and (meth)acryloyloxyhydroxy $C_{1-6}$ alkyl group (e.g. 3-(meth)acryloyloxy-2-hydroxypropyl group) are preferable in view of reactivity and easy introduction (note that the $C_{1-6}$ alkyl means a linear or branched alkyl group having 1 to 6 carbon atoms).

When having a crosslinkable functional group as described above, the crosslinkable polyvinyl acetal porous powder forms a cured product with excellent solvent resistance after crosslinking. The content of the above-mentioned crosslinkable functional group is 0.3 to 20 mol%, preferably 0.5 to 10 mol%, more preferably 1.0 to 10 mol%, with respect to the total of -CH$_2$-CH- units in the main chain of the polyvinyl acetal.

In the present invention, it is preferable for the monomer unit having a crosslinkable functional group bonded thereto through an ester bond to have a chemical structure in which a hydroxyl group in a vinyl alcohol unit and a carboxylic acid compound having a crosslinkable functional group are esterified, or to have a chemical structure in which the monomer unit having a carboxyl group and an epoxy compound having a crosslinkable functional group are esterified.

The monomer unit having a crosslinkable functional group bonded thereto through an ether bond preferably has a chemical structure in which a hydroxyl group in a vinyl alcohol unit and an epoxy compound having a crosslinkable functional group are reacted to form an ether bond.

The monomer unit having a crosslinkable functional group bonded thereto through an urethane bond preferably has a chemical structure in which a hydroxyl group in a vinyl alcohol unit and an isocyanate compound having a crosslinkable functional group are reacted to form an urethane bond.

In the above description, a vinyl alcohol unit and a monomer unit each mean a unit corresponding to a repetition unit in the main chain of the polyvinyl acetal. The crosslinkable polyvinyl acetal of the porous powder of the present invention may include two or more kinds of the monomer units having a crosslinkable functional group bonded thereto.

Examples of the carboxylic acid compound having a crosslinkable functional group include an unsaturated monocarboxylic acid. Examples of the unsaturated monocarboxylic acid include (meth)acrylic acid, crotonic acid, oleic acid, and cinnamic acid. Among these, an unsaturated monocarboxylic acid having a (meth)acryloyl group or a cinnamoyl group is preferable, because of the high crosslinkability of the crosslinkable polyvinyl acetal porous powder to be obtained. Specifically, (meth) acrylic acid and cinnamic acid are particularly preferable.

In addition, dicarboxylic acids and tricarboxylic acids such as maleic acid, itaconic acid, succinic acid, 1,2-cyclohexane dicarboxylic acid, glutaric acid, phthalic acid, and trimellitic acid, are also preferable. In the case of using these dicarboxylic acids or tricarboxylic acids, the crosslinkable functional group includes a carboxyl group and/or carboxylate group. In the case of using maleic acid or itaconic acid, the crosslinkable functional group includes not only a carboxyl group and/or carboxylate group, but also an ethylenically unsaturated bond.

The carboxylic acid compound having a crosslinkable functional group may be used independently, or two or more kinds of them may be used in combination.

Preferable examples of the epoxy compound having a crosslinkable functional group include glycidyl (meth)acrylate, 3,4-epoxycyclohexyl (meth)acrylate, glycidyl cinnamate, allyl glycidyl ether, 1,2-epoxy-3-butene, 1,2-epoxy-5-hexene, 1,2-epoxy-7-octene, and 1,2-epoxy-9-decene. The epoxy compound having a crosslinkable functional group may be used independently, or two or more kinds of them may be used in combination.

Preferable examples of the isocyanate compound having a crosslinkable functional group include 2-isocyanoethyl (meth)acrylate, 3-isopropenyl-α, α-dimethylbenzyl isocyanate, vinyl isocyanate, and allyl isocyanate. The isocyanate compound having a crosslinkable functional group may be used independently, or two or more kinds of them may be used in combination.

Examples of the structure of a monomer unit having a carboxyl group include a vinyl monomer unit having a carboxyl group such as (meth)acrylic acid, crotonic acid, oleic acid, maleic acid, fumaric acid, and itaconic acid; a unit in which a vinyl alcohol unit is acetalized with an aldehyde having a carboxyl group (e.g. glyoxylic acid, phthalaldehydic acid, and terephthalaldehydic acid); and a monomer unit in which a hydroxyl group in the vinyl alcohol unit and a dicarboxylic acid are half-esterified. Examples of the dicarboxylic acid include maleic acid, fumaric acid, itaconic acid, succinic acid, phthalic acid, and terephthalic acid.

The crosslinkable polyvinyl acetal porous powder of the present invention generally includes an acetal unit, a vinyl alcohol unit, and a vinyl ester unit that is derived from the raw material (the after-mentioned vinyl ester monomers) for producing polyvinyl acetal, other than the monomer unit having a crosslinkable functional group bonded thereto. Further, the crosslinkable polyvinyl acetal porous powder of the present invention may include a monomer unit derived from a monomer component that is copolymerizable with the after-mentioned vinyl ester monomer. As to such monomer component, examples are described in the description of the production method.

The content of the vinyl ester unit in the crosslinkable polyvinyl acetal porous powder is preferably 0.1 to 30 mol%. The content of the vinyl alcohol unit is preferably about 10 to 50 mol% (specifically, 9.7 to 49.7 mol%). The degree of acetalization is preferably 40 to 85 mol%, more preferably 50 to 85 mol%. These each are a value with respect to the total of $-CH_2-CH-$units in the main chain of the polyvinyl acetal.

Concerning the monomer units having a crosslinkable functional group bonded thereto, the content of the crosslinkable functional group is 0.3 to 20 mol%, preferably 0.5 to 10 mol%, more preferably 1.0 to 10 mol%, with respect to the total of $-CH_2-CH-$ units in the main chain, as described above.

In the case that the crosslinkable polyvinyl acetal porous powder has a carboxyl group and/or a carboxylate group as a crosslinkable functional group, the content of the carboxyl group and/or the carboxylate group in the crosslinkable polyvinyl acetal porous powder preferably satisfies the condition given by the following Formula (1).

$$0 \leq [\text{Amount of carboxylate groups/(Total amount of carboxyl groups and carboxylate groups)}] \leq 0.3 \ ...(1)$$

The conventionally known crosslinkable polyvinyl acetal porous powder having a carboxyl group and carboxylate group introduced therein has suffered from a problem that reduction in transparency is likely to occur because of moisture absorption during storage or use of a product for a long period. This is because most of the carboxyl groups are neutralized in the process for neutralizing the acid catalyst used for acetalization, and thereby converted into a highly hydrophilic carboxylate group. Moreover, there has been a problem that reduction in moisture resistance or transparency, or yellowing of the crosslinking composition occurs because, during crosslinking, condensation reaction of a carboxylate group with a hydroxyl group is difficult to proceed compared to that of a carboxyl group. The problem results also from the compound that is formed due to the condensation reaction between the carboxylate group and the hydroxyl group (e.g. a sodium hydroxide in the case that the carboxylate group is a sodium carboxylate, and ammonia in the case that it is an ammonium carboxylate). However, by adjusting the total amount of the carboxyl groups and the carboxylate groups in the above-mentioned range, these problems can be solved.

In the present invention, a carboxylate group means a group in which the proton of a carboxyl group is substituted by a monovalent or polyvalent metal ion, or a cation such as various ammonium ions. Typically, the carboxylate group is formed by neutralizing a carboxyl group with alkali metal salts such as sodium hydroxide, alkaline earth metal salts such as magnesium hydroxide, and amines such as ammonia and pyridine in the present invention. The ratio expressed by the formula [amount of carboxylate groups/(total amount of carboxyl groups and carboxylate groups)] is a ratio expressed using the molar ratio of the amount of the carboxylate groups, and the total amount of the carboxyl groups and the carboxylate groups.

As a result of the diligent studies by the inventors, they have found that, when the polyvinyl acetal powder is porous and has a specific average particle size and bulk density that specify the degree of the porosity, the crosslinkable polyvinyl acetal powder is excellent in solvent solubility and washability, and can form a cured product excellent in solvent resistance by being subjected to UV irradiation, electron beam irradiation, thermal treatment, or the like.

Accordingly, it is important for the crosslinkable polyvinyl acetal porous powder of the present invention to have an average particle size of 30 to 10000 $\mu$m, preferably 30 to 1000 $\mu$m, more preferably 30 to 300 $\mu$m. Further, it also is important to have a bulk density of 0.12 to 0.50 g/mL, preferably 0.12 to 0.40 g/mL, more preferably 0.12 to 0.30 g/mL. If the average particle size is more than 10000 $\mu$m, or the bulk density is more than 0.50 g/mL, a solution and/or solvent is difficult to penetrate into the inside of the particle of the polyvinyl acetal porous powder that is a raw material of the crosslinkable polyvinyl acetal porous powder. As a result, the reaction efficiency to introduce the crosslinkable functional group is decreased, and in addition, the washing efficiency and solvent solubility after the reaction may be decreased. On the other hand, if the average particle size is less than 30 $\mu$m, or the bulk density is less than 0.12 g/mL, the particles may agglomerate and form a so-called "Dama" (which is a large aggregated particle formed by simply aggregating particles together) during washing after the reaction for introducing the crosslinkable functional group, or when trying to dissolve in a solvent, they may form a so-called "Mamako" (which is a particle aggregate internally including foams, with the surface being dissolved, in which a solvent is difficult to penetrate into the inside because of the foams, thereby lowering the dissolving rate). As a result, workability may be deteriorated.

The crosslinkable polyvinyl acetal porous powder is preferably formed by primary particles having an average particle size of 10 $\mu$m or less. If the crosslinkable polyvinyl acetal porous powder is formed by the primary particles having an average particle size of 10 $\mu$m or less, a structure is formed in which pores are uniformly dispersed in the secondary particle. As a result, a solution and/or a solvent can easily penetrate into the inside of the particle, thereby improving the reaction efficiency when introducing the crosslinkable functional group, as well as the washing efficiency and solvent solubility after the reaction.

The average particle size of the crosslinkable polyvinyl acetal porous powder can be determined by a measurement using, for example, a laser diffraction method. As a device to be used for the measurement, for example, a particle size distribution analyzer SALD2200 manufactured by SHIMADZU CORPORATION is mentioned.

The average particle size of the primary particles of the crosslinkable polyvinyl acetal porous powder can be determined with a scanning electron microscope (SEM) by taking 3 photographs (3 pieces) of the powder at 1000-fold magnification, measuring each particle size of the primary particles that have been selected to be determinable from the obtained images (50 particles or more per 1 image), and calculating the mean value. The measurement of the primary particle size may be carried out with respect to the major axis.

The bulk density may be determined, for example, based on JIS K6721.

The degree of polymerization of the crosslinkable polyvinyl acetal porous powder is preferably 100 to 3000, more preferably 200 to 2000, in view of solvent solubility, workability, solvent resistance of the cured product, and the like.

The water content of the crosslinkable polyvinyl acetal porous powder of the present invention is preferably 2.5 wt% or less, more preferably 2.0 wt% or less. As a method for adjusting the water content of the crosslinkable polyvinyl acetal porous powder to 2.5 wt% or less, there is a method in which the crosslinkable polyvinyl acetal porous powder obtained by the after-mentioned method is washed with water or a mixed solution of water/alcohol, followed by drying, so that water is removed until the water content thereof is the prescribed amount or less.

The crosslinkable polyvinyl acetal porous powder of the present invention can be obtained using, for example, the below-indicated production method (the production method of the present invention).

Specifically, the crosslinkable polyvinyl acetal porous powder can be obtained using a method for producing a crosslinkable polyvinyl acetal porous powder, including reacting a polyvinyl acetal porous powder that may have a carboxyl group and/or carboxylate group with a compound having a crosslinkable functional group.

The reaction is carried out in the state where the polyvinyl acetal porous powder is dispersed in a solvent in which the compound having a crosslinkable functional group is soluble, but the polyvinyl acetal porous powder and the crosslinkable polyvinyl acetal porous powder are insoluble.

Examples of the compound having a crosslinkable functional group include a carboxylic acid compound having a crosslinkable functional group or the derivatives thereof, an epoxy compound having a crosslinkable functional group, and an isocyanate compound having a crosslinkable functional group. The following methods (A) to (D) are the specific embodiments of the production method, for example.

Method (A): In the afore-mentioned reaction, the residual hydroxyl group of the polyvinyl acetal porous powder that may have a carboxyl group and/or carboxylate group is reacted with a carboxylic acid compound having a crosslinkable functional group or a derivative thereof.
Method (B): In the afore-mentioned reaction, the carboxyl group and/or the carboxylate group in the polyvinyl acetal porous powder having the carboxyl group and/or the carboxylate group is reacted with an epoxy compound having a crosslinkable functional group.
Method (C): In the afore-mentioned reaction, the residual hydroxyl group of the polyvinyl acetal porous powder that may have a carboxyl group and/or carboxylate group is reacted with an epoxy compound having a crosslinkable functional group.
Method (D): In the afore-mentioned reaction, the residual hydroxyl group of the polyvinyl acetal porous powder that may have a carboxyl group and/or a carboxylate group is reacted with an isocyanate compound having a crosslinkable functional group.

According to the production method of the present invention, a crosslinkable polyvinyl acetal porous powder can be obtained with little change in the average particle size and bulk density of a polyvinyl acetal porous powder as a raw material, because the reaction is carried out in a solvent in which the polyvinyl acetal porous powder as a raw material and the crosslinkable polyvinyl acetal porous powder to be formed are insoluble.

Accordingly, it is preferable that the polyvinyl acetal porous powder to be used as a raw material has an average particle size of 30 to 10000 $\mu$m and a bulk density of 0.12 to 0.50 g/mL. The average particle size of the polyvinyl acetal porous powder as a raw material is more preferably 30 to 1000 $\mu$m, further preferably 30 to 300 $\mu$m. The bulk density of the polyvinyl acetal porous powder as a raw material is more preferably 0.12 to 0.40 g/mL, further preferably 0.12 to 0.30 g/mL.

The polymerization degree of the polyvinyl acetal porous powder (polyvinyl alcohol) as a raw material is preferably 100 to 3000, more preferably 200 to 2000.

The polyvinyl acetal porous powder having the above-mentioned specific average particle size and bulk density can be obtained using, for example, the following method.

First, a 3 to 15 wt% aqueous solution of a vinyl alcohol polymer is adjusted within a temperature range from 80 to 100°C, and then the temperature is gradually decreased taking 10 to 60 minutes. After the temperature is decreased to a range from -10 to 30°C, an aldehyde and an acid catalyst are added thereto, and acetalization reaction is carried out for 30 to 300 minutes, keeping the temperature constant. Thereafter, the reaction mixure is heated to the temperature of 40 to 80°C, taking 30 to 200 minutes. The temperature is maintained for 60 to 360 minutes. Next, the reaction mixure is cooled to, preferably, a room temperature, and after water washing, a neutralizer such as alkali is added thereto. By washing and drying it, the target polyvinyl acetal porous powder can be obtained. Although the polyvinyl acetal porous powder to be obtained generally has the above-mentioned specific average particle size and bulk density, sieve classification or the like may be carried out for adjusting the average particle size and bulk density more specifically.

The acid catalyst to be used for the acetalization reaction is not specifically limited and either of an organic acid and inorganic acid may be used. Examples thereof include p-toluenesulfonic acid, nitric acid, sulfuric acid, and hydrochloric acid. Among these, more generally, hydrochloric acid, sulfuric acid, and nitric acid are used, and particularly, hydrochloric acid is preferably used.

The polyvinyl acetal porous powder to be used in the present invention is obtained preferably by acetalizing a vinyl alcohol polymer with an aldehyde having 2 to 6 carbon atoms. Examples of the aldehyde having 2 to 6 carbon atoms include acetaldehyde, propionaldehyde, n-butyl aldehyde, isobutyl aldehyde, n-hexyl aldehyde, and 2-ethylbutyl aldehyde. One of these may be used independently, or two or more kinds of them may be used in combination. Among these, aldehydes having 4 to 6 carbon atoms, particularly n-butyl aldehyde is used preferably. Use of an aldehyde having 2 to 6 carbon atoms, particularly having 4 to 6 carbon atoms, allows a crosslinkable polyvinyl acetal porous powder suitable for achieving the objects of the present invention to be obtained.

The acetalization degree of the polyvinyl acetal porous powder in the present invention is 40 to 85 mol%, preferably 50 to 85 mol%. Further, the content of vinyl ester units in the polyvinyl acetal is preferably 0.1 to 30 mol%, and the content of vinyl alcohol units therein is preferably 10 to 50 mol%. If the acetalization degree, the content of vinyl acetate, and the content of vinyl alcohol are in these ranges respectively, a crosslinkable polyvinyl acetal porous powder more suitable for achieving the objects of the present invention can be obtained.

It should be noted that the acetalization degree, the content of vinyl ester units, and the content of vinyl alcohol units described above each are a value with respect to the total of $-CH_2-CH-$ units in the main chain of the polyvinyl acetal.

The above-mentioned vinyl alcohol polymer can be obtained using a conventionally known method, that is, by polymerizing vinyl ester monomers, and saponifying the obtained polymer. As a method for polymerizing vinyl ester monomers, conventionally known methods may be employed, such as solution polymerization, bulk polymerization, suspension polymerization, and emulsion polymerization. A catalyst to be used for the polymerization may be one appropriately selected from, for example, an azo catalyst, a peroxide catalyst, and a redox catalyst, depending on the polymerization method to be employed. The saponification reaction may be carried out by a conventionally known method, such as alcoholysis or hydrolysis using an alkaline catalyst or an acid catalyst. Among these, saponification reaction using methanol as a solvent and a caustic soda (NaOH) as a catalyst is simple and easy, and thus is most preferable.

Examples of the vinyl ester monomers include vinyl formate, vinyl acetate, vinyl propionate, vinyl butyrate, vinyl isobutyrate, vinyl pivalate, vinyl versatate, vinyl caproate, vinyl caprylate, vinyl laurylate, vinyl palmitate, vinyl stearate, vinyl oleate, and vinyl benzoate. Above all, vinyl acetate is preferable.

The afore-mentioned vinyl ester monomers may be copolymerized with other monomer units for use without impairing the effects of the present invention. Examples of the above-mentioned other monomer units include: $\alpha$-olefins such as ethylene, propylene, n-butene, and isobutylene; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide and acrylamide derivatives such as N-methylacrylamide, N-ethylacrylamide, N,N-dimethylacrylamide, diacetone acrylamide, acrylamide propanesulfonic acid and its salts, acrylamide propyldimethylamine and its salts and its quaternary salts, and N-methylol acrylamide and its derivatives; methacrylamide and methacrylamide derivatives such as N-methylmethacrylamide, N-ethylmethacrylamide, methacrylamide propanesulfonic acid and its salts, methacrylamide propyldimethylamine and its salts and its quaternary salts, and N-methylol methacrylamide and its derivatives; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate and allyl chloride; maleic acid esters or maleic acid anhydride; vinylsilyl compounds such as vinyltrimethoxysilane; and isopropenyl acetate. These monomer units are used generally in an amount less than 10 mol % with respect to vinyl ester monomers.

When the polyvinyl acetal porous powder having a carboxyl group and/or carboxylate group is used as a raw material, the polyvinyl acetal porous powder to be used can be obtained by, for example, acetalizing polyvinyl alcohol having a carboxyl group and/or carboxylate group, acetalizing polyvinyl alcohol with an aldehyde having a carboxyl group and/or carboxylate group, or acetalizing polyvinyl alcohol followed by introduction of a carboxyl group and/or carboxylate group.

The polyvinyl alcohol having a carboxyl group and/or carboxylate group may be obtained by, for example, copolymerizing an unsaturated monovalent or polyvalent carboxylic acid or the carboxylic acid salts thereof, or reacting a dicarboxylic acid or a derivative thereof with a hydroxyl group of the polyvinyl alcohol for half-esterification. The term, half-esterification, herein means reaction in which one molecule of the dicarboxylic acid or the derivative and one hydroxyl group in the polyvinyl alcohol are reacted, thereby introducing a carboxyl group or a carboxylate group into the polyvinyl alcohol.

Specifically, examples of the unsaturated monocarboxylic acid or the derivatives thereof to be used as a comonomer include (meth)acrylic acid, crotonic acid, oleic acid, and the carboxylic acid salts thereof (such as lithium salts, sodium salts, potassium salts, magnesium salts, calcium salts and various aliphatic and aromatic ammonium salts). As the unsaturated polyvalent carboxylic acid or the derivatives thereof to be used as a comonomer, an unsaturated dicarboxylic acid or the derivatives thereof are particularly preferable. Specifically, examples thereof include maleic acid, fumaric acid, itaconic acid, the carboxylic acid salts thereof (such as lithium salts, sodium salts, potassium salts, magnesium salts, calcium salts, and various aliphatic and aromatic ammonium salts), unsaturated dicarboxylic acid monoesters (alkyl esters such as methyl ester and ethyl ester), and unsaturated dicarboxylic acid anhydrides (such as maleic acid anhydride and itaconic acid anhydride).

Examples of the dicarboxylic acid or the derivatives thereof to be used for half-esterification include maleic acid, fumaric acid, itaconic acid, succinic acid, phthalic acid, terephthalic acid, the carboxylic acid salts thereof (such as lithium salt, sodium salt, potassium salt, magnesium salt, calcium salt, and various aliphatic and aromatic ammonium salts), dicarboxylic acid monoesters (alkyl esters such as methyl ester and ethyl ester), and dicarboxylic acid anhydrides (such as maleic acid anhydride, itaconic acid anhydride, succinic acid anhydride, and phthalic acid anhydride).

In order to acetalize the polyvinyl alcohol with an aldehyde having a carboxyl group and/or a carboxylate group, an aldehyde having a carboxyl group and/or carboxylate group may be used as an aldehyde for the acetalization in the acetalization method of the polyvinyl alcohol. Specifically, examples of the aldehyde having a carboxyl group and/or a carboxylate group include glyoxylic acid, phthalaldehydic acid, and terephthalaldehydic acid. Two or more kinds of these aldehydes may be used as needed, or aldehydes other than these may be used simultaneously.

As a method for acetalizing the polyvinyl alcohol followed by introduction of a carboxyl group and/or carboxylate group, there is a method, in which the polyvinyl alcohol is acetalized, and then a dicarboxylic acid or a derivative thereof is reacted with a hydroxyl group of the polyvinyl acetal for half-esterification. Examples of the dicarboxylic acid or the derivatives thereof to be used for the half-esterification include maleic acid, fumaric acid, itaconic acid, succinic acid, phthalic acid, terephthalic acid, the carboxylic acid salts thereof (such as lithium salt, sodium salt, potassium salt, magnesium salt, calcium salt, and various aliphatic and aromatic ammonium salts), dicarboxylic acid monoesters (alkyl esters such as methyl ester, ethyl ester), and dicarboxylic acid anhydrides (such as maleic acid anhydride, itaconic acid anhydride, succinic acid anhydride, and phthalic acid anhydride).

Examples of the compound having a crosslinkable functional group include a carboxylic acid compound having a crosslinkable functional group or the derivatives thereof, an epoxy compound having a crosslinkable functional group, and an isocyanate compound having a crosslinkable functional group.

The derivatives of a carboxylic acid compound means, for example, acid halides, esters, acid anhydrides, and lactones. Examples of the carboxylic acid compound having a crosslinkable functional group or the derivatives thereof include unsaturated monovalent or polyvalent carboxylic acids, and the derivatives thereof. Examples of the unsaturated monocarboxylic acid and the derivatives thereof include (meth)acrylic acid, (meth)acrylic acid chloride, methyl (meth)acrylate, ethyl (meth)acrylate, butyl (meth)acrylate, (meth)acrylic acid anhydride, crotonic acid, crotonic acid chloride, methyl crotonate, ethyl crotonate, butyl crotonate, crotonic acid anhydride, oleic acid, oleic acid chloride, methyl oleate, ethyl oleate, butyl oleate, oleic acid anhydride, cinnamic acid, cinnamic acid chloride, methyl cinnamate, ethyl cinnamate, cinnamic acid anhydride, and gamma-crotonolactone. Among these, an unsaturated monocarboxylic acid having a (meth)acryloyl group, or a cinnamoyl group and the derivatives thereof are preferable, because of high crosslinkability of the crosslinkable polyvinyl acetal porous powder to be obtained. Specifically, (meth)acrylic acid, (meth)acrylic acid chloride, methyl (meth)acrylate, ethyl (meth)acrylate, butyl (meth)acrylate, (meth)acrylic acid anhydride, cinnamic acid, cinnamic acid chloride, methyl cinnamate, ethyl cinnamate, and cinnamic acid anhydride are preferable. Since higher reactivity with the residual hydroxyl group can be obtained, (meth)acrylic acid chloride, (meth)acrylic acid anhydride, cinnamic acid chloride, and cinnamic acid anhydride are particularly preferable.

As an unsaturated polyvalent carboxylic acid and the derivatives thereof, an unsaturated dicarboxylic acid and the derivatives thereof are particularly preferable. Specifically, examples thereof include maleic acid, maleic acid chloride, monomethyl maleate, monoethyl maleate, monobutyl maleate, maleic acid anhydride, itaconic acid, itaconic acid chloride, monomethyl itaconate, monoethyl itaconate, monobutyl itaconate, itaconic acid anhydride, fumaric acid, fumaric acid chloride, monomethyl fumarate, monoethyl fumarate, monobutyl fumarate, succinic acid, succinic acid anhydride, 1,2-cyclohexane dicarboxylic acid, (1,2-cyclohexane dicarboxylic acid) anhydride, glutaric acid, glutaric acid anhydride, phthalic acid anhydride, trimellitic acid, and trimellitic acid anhydride. Among these, maleic acid anhydride, itaconic acid anhydride, succinic acid anhydride, (1,2-cyclohexane dicarboxylic acid) anhydride, glutaric acid anhydride, phthalic acid anhydride, and trimellitic acid anhydride are preferable. One of these may be used independently, or two or more kinds of them may be used in combination.

In the case of reacting a carboxylic acid anhydride, the crosslinkable polyvinyl acetal porous powder to be obtained is not required to be treated with an alkaline compound after the introduction of a carboxyl group. Because of this, the carboxylate groups that cause a reduction in moisture resistance, a reduction in transparency, or yellowing of a coating film, are introduced at a low ratio with respect to the total of the introduction amounts of the carboxyl groups and carboxylate groups. As a result, reduction in properties caused by the carboxylate groups can be avoided, while sufficient crosslinkability is maintained. Accordingly, a carboxylic acid anhydride is suitable for use.

Preferable examples of the epoxy compound having a crosslinkable functional group include glycidyl (meth)acrylate, 3,4-epoxycyclohexyl (meth)acrylate, glycidyl cinnamate, allyl glycidyl ether, 1,2-epoxy-3-butene, 1,2-epoxy-5-hexene, 1,2-epoxy-7-octene, and 1,2-epoxy-9-decene. One of these may be used independently, or two or more kinds of them may be used in combination. These epoxy compounds may be used in either the method (B) or (C).

Preferable examples of the isocyanate compound having a crosslinkable functional group include 2-isocyano ethyl (meth)acrylate, 3-isopropenyl-$\alpha,\alpha$-dimethyl benzyl isocyanate, vinyl isocyanate, and allyl isocyanate. One of these may be used independently, or two or more kinds of them may be used in combination.

As a solvent in which a catalyst and a compound having a crosslinkable functional group and a carboxyl group or its derivative group are soluble but the polyvinyl acetal porous powder as a raw material and the crosslinkable polyvinyl acetal porous powder as a product are insoluble, a solvent may be used, in which: the catalyst and the compound having a crosslinkable functional group and a carboxyl group or its derivative group each have a solubility of 5 wt% or more, preferably 70 wt% or more, most preferably 100 wt%; and the polyvinyl acetal porous powder as a raw material and the crosslinkable polyvinyl acetal porous powder as a product each have a solubility of less than 5 wt%, preferably 3 wt% or less, most preferably 0 wt%.

The kind of the solvent may be appropriately determined, depending on the kinds of the catalyst and the compound having a crosslinkable functional group and a carboxyl group or its derivative group. Preferable examples thereof include a solvent in which a poor solvent of polyvinyl acetal, such as hexane, heptane, octane, nonane, decane, cyclohexane, toluene, xylene, ethylbenzene, diethyl ether, and diisopropyl ether, and a good solvent of polyvinyl acetal, such as acetone, methyl ethyl ketone (MEK), dioxane, tetrahydrofuran, ethyl acetate, chloroform, dimethyl formamide, and dimethyl sulfoxide, are mixed at a ratio, the poor solvent/the good solvent, of 100/0 to 70/30 (weight ratio).

A catalyst may be used in the production method of the present invention so that the reaction proceeds smoothly. As a catalyst, catalysts soluble in the above-mentioned solvent are preferable for use. In addition, a reaction aid such as an acid trapping agent may be added so that the reaction proceeds smoothly. Reaction aids soluble in the above-mentioned solvent also are preferable for use.

Specific examples of the catalyst and the reaction aid in the method (A) include organic acids such as p-toluenesulfonic acid, trifluoroacetic acid, and 3,4-dihydroxy-3-cyclobutene-1,2-dione; inorganic acids such as hydrochloric acid, sulfuric acid, nitric acid, and phosphoric acid; ammonia; aliphatic amines such as trimethyl amine, triethyl amine, 2-(dimethylamino)ethyl methacrylate, 1,4-diaza-bicyclo[2.2.2]octane, 1,8-diaza-bicyclo[5.4.0]-7-undecene, 1,5-diaza-bicyclo[4.3.0]-5-nonene, 1-methyl piperidine, and 1-methyl pyrrolidine; aromatic amines such as pyridine, 4-dimethylamino pyridine, 4-(1-piperidyl) pyridine, N-methyl imidazole, and N,N-dimethyl aniline; alkali metal salts such as sodium hydroxide; alkaline earth metal salts such as magnesium hydroxide; various Lewis acids such as aluminum oxide and dichlorotin dilaurate. Particularly, alkali metal salts, alkaline earth metal salts, and amines are preferable. The amount of these to be added is preferably 30 mol% or less, particularly preferably 10 mol% or less, with respect to the compound having a crosslinkable functional group and a carboxyl group or its derivative group to be used in the reaction. Even if the amount is over 30 mol%, it is not expected to have much effect on the promotion of the reaction. Particularly, in the case that the reaction is carried out using alkali metal salts such as sodium hydroxide, alkaline earth metal salts such as magnesium hydroxide, and amines, to introduce a functional group having a carboxyl group and carboxylate group as a crosslinkable functional group, if the use amount of the catalyst is over 30 mol%, the ratio expressed as [amount of carboxylate groups/(total amount of carboxyl groups and carboxylate groups)] in the crosslinkable polyvinyl acetal porous powder may exceed 0.3, which is unpreferable.

Specific examples of the catalyst in the method (B) include aliphatic amines, aromatic amines, metal salts, and Lewis acid catalysts. In view of reactivity, aliphatic amines such as trimethyl amine, triethyl amine, 2-(dimethylamino)ethyl methacrylate, 1,4-diaza-bicyclo[2.2.2]octane, 1,8-diaza-bicyclo[5.4.0]-7-undecene, 1,5-diaza-bicyclo[4.3.0]-5-nonene, 1-methyl piperidine, and 1-methyl pyrrolidine; and aromatic amines such as pyridine, 4-dimethylamino pyridine, 4-(1-piperidyl) pyridine, N-methyl imidazole, and N,N-dimethyl aniline are suitable for use.

Specific examples of the catalyst in the methods (C) and (D) include aliphatic amines such as trimethyl amine, triethyl amine, 2-(dimethylamino)ethyl methacrylate, 1,4-diaza-bicyclo[2.2.2]octane, 1,8-diaza-bicyclo[5.4.0]-7-undecene, 1,5-diaza-bicyclo[4.3.0]-5-nonene, 1-methyl piperidine, and 1-methyl pyrrolidine; and aromatic amines such as pyridine, 4-dimethylamino pyridine, 4-(1-piperidyl) pyridine, N-methyl imidazole, and N,N-dimethyl anilin; and Lewis acid catalysts such as dibutyltin dilaurate, dibutyltin diacetate. In view of reactivity, aliphatic amines and aromatic amines are suitable for use.

In the production method of the present invention, an appropriate amount of a polymerization inhibitor or other additives may be added as needed. Examples of the polymerization inhibitor include phenolic compounds such as hydroquinone, 4-methoxyphenol, 3,5-di-t-butyl-4-hydroxytoluene, 2,2-methylene-bis(4-methyl-6-t-butylphenol), and 1,1,3-tris-(2-methyl-4-hydroxy-5-t-butyl phenyl)butane, sulfur compounds such as dilauryl thiodipropionate, phosphor compounds such as triphenyl phosphite, amine compounds such as phenothiazine, and stable free radicals such as 2,2,6,6-tetramethyl-1-piperidinyloxy. The amount of the polymerization inhibitor to be added is preferably about 0.001 to 1% with respect to the weight of the polyvinyl acetal porous powder.

In the method (B), the epoxy compound having a crosslinkable functional group may react with the residual hydroxyl group in the polyvinyl acetal porous powder as a raw material. In the method (C), in the case that the polyvinyl acetal porous powder as a raw material has a carboxyl group and/or a carboxylate group, the epoxy compound having a crosslinkable functional group may react with the carboxyl group and/or the carboxylate group.

The amount of the polyvinyl acetal porous powder as a raw material and the compound having a crosslinkable functional group to be used may be determined appropriately, considering the desired molar percentage of the residual hydroxyl group in the polyvinyl acetal porous powder as a raw material and/or the carboxyl group and/or the carboxylate group to be reacted, and the reaction rate of the reation. In this regard, the amount to be used may be selected so that the content of the crosslinkable functional groups is preferably 0.3 to 20 mol%, more preferably 0.5 to 10 mol%, further preferably 1.0 to 10 mol%, with respect to the total of $-CH_2-CH-$ units in the main chain.

The reaction is carried out in a slurry in which the polyvinyl acetal porous powder as a raw material is dispersed in the solvent. The concentration of the solid content (polyvinyl acetal porous powder) in the slurry may be comparatively high, such as 10 to 40 wt%, preferably 15 to 30 wt%. Accordingly, the production method of the present invention is excellent also in productivity. The concentration of the solid content herein is expressed by: {weight of polyvinyl acetal porous powder/((weight of polyvinyl acetal porous powder)+(weight of solvent))} $\times$ 100.

In the method (A), the reaction temperature is preferably -10 to 60°C, more preferably -5 to 55°C, further preferably 0 to 50°C. If the reaction temperature is lower than -10°C, the reaction rate is low, which may result in poor productivity. Meanwhile, if the reaction temperature is higher than 60°C, fusion between particles of the polyvinyl acetal porous powder may be likely to occur during the reaction. In the case of using a compound with poor thermostability as a carboxylic acid compound having a crosslinkable functional group or the derivatives thereof, such as (meth)acrylic acid chloride, (meth)acrylic acid anhydride, cinnamic acid chloride, and cinnamic acid anhydride, these compounds and/or the crosslinkable functional group introduced in the formed crosslinkable polyvinyl acetal porous powder may be thermally reacted and thereby crosslinked. As a result, problems may occur such as increase in the melt viscosity of the crosslinkable polyvinyl acetal porous powder to be obtained or in the solution viscosity, or formation of undissolved residue.

In the method (A), the reaction time is preferably 10 minutes to 24 hours, more preferably 30 minutes to 10 hours.

In the methods (B) to (D), the reaction may be carried out at a temperature of -10 to 80°C, preferably 0 to 70°C, for 10 minutes to 24 hours, preferably 30 minutes to 10 hours. If the reaction temperature is lower than -10°C, the reaction rate is low, which may result in poor productivity. Meanwhile, if the reaction temperature is higher than 80°C, side reactions such as polymerization of the compound having a crosslinkable functional group may occur.

After filtering the product obtained by the above-mentioned reaction, washing and drying it, the target crosslinkable polyvinyl acetal porous powder of the present invention can be obtained.

The obtained crosslinkable polyvinyl acetal porous powder may be, for example, granulated by compression, or crushed, in order to adjust the average particle size of the aggregated particles of the crosslinkable polyvinyl acetal porous powder to 30 to 10000 μm, and the bulk density thereof to 0.12 to 0.50 g/mL.

In the production method of the present invention, the reaction is carried out in a solvent in which the polyvinyl acetal porous powder as a raw material and the crosslinkable polyvinyl acetal porous powder to be formed are insoluble, and therefore the crosslinkable polyvinyl acetal powder is obtained in porous form as aggregated particles in which the primary particles agglomerate. As a result, the crosslinkable polyvinyl acetal porous powder can be obtained, having an average particle size of 30 to 10000 μm, and a bulk density of 0.12 to 0.50 g/mL, which is a main feature of the production method of the present invention. The crosslinkable polyvinyl acetal porous powder having such average particle size and bulk density is excellent in solvent solubility, and exceptionally excellent in washability with water after the reaction.

Therefore, according to the production method of the present invention, the crosslinkable polyvinyl acetal porous powder can be produced efficiently, and thus is excellent also in workability. In addition, in spite that the reaction proceeds in a heterogeneous system, the crosslinkable polyvinyl acetal porous powder to be obtained forms a cured product having exceptionally excellent solvent resistance by being subjected to photoirradiation, electron beam irradiation, thermal treatment or the like.

A cured product can be obtained by melting or dissolving in a solvent the crosslinkable polyvinyl acetal porous powder of the present invention, together with a crosslinking initiator or a crosslinking reaction catalyst as needed, casting it onto a substrate, drying it to form a coating film, and subjecting the coating film to UV irradiation, electron beam irradiation, and thermal treatment, for example.

For example, in the case of the crosslinkable polyvinyl acetal porous powder having an ethylenically unsaturated bond introduced therein, a compound that generates a radical by thermal treatment, such as $\alpha,\alpha$-azobisisobutyronitrile and benzoyl peroxide, or a compound that generates a radical by photoirradiation, such as (1,1-dimethylethyl) phenyl ketone and 2-hydroxy-4'-(2-hydroxyethoxy)-2-methylpropiophenone is added as a crosslinking initiator to the crosslinkable polyvinyl acetal porous powder, and then a coating film is obtained. Then, the coating film is subjected to photoirradiation and/or thermal treatment, so that a cured product can be obtained. In the case of the crosslinkable polyvinyl acetal porous powder having a carboxyl group and/or a carboxylate group introduced therein, the coating film is heated to 100 to 250°C, so that a cured product can be obtained by condensation reaction between the carboxyl group and/or the carboxylate group, and the residual hydroxyl group.

The cured product thus obtained has excellent solvent resistance. If the excellence of the solvent resistance is expressed as an index, for example, by a residual ratio of a cured product (such as a coating film) that has been immersed in an ethanol maintained at 50°C for 2 hours, the residual ratio is preferably 70 to 100%, more preferably 80 to 100%.

The crosslinkable polyvinyl acetal porous powder of the present invention can form a cured product having excellent solvent resistance by being subjected to UV irradiation, electron beam irradiation, thermal treatment or the like, and therefore can be used for various applications making use of the advantageous properties. Examples of the applications include crosslinkable ceramic compositions, photosensitive compositions, crosslinkable ink compositions (for the application of letterpress printing, gravure printing, offset printing, screen printing, and ink-jet printing), crosslinkable powder coatings, crosslinkable liquid coatings, crosslinkable interlayer films for automotive or building glass, crosslinkable binders for inorganic materials, and crosslinkable adhesives. The crosslinkable polyvinyl acetal porous powder of the present invention is often used as a binder or an adhesive among these applications. In each application, necessary components may be added appropriately corresponding to the application. In addition, a dilute solvent, a pigment, a filler, an antioxidant, a plasticizer or the like may be added, as needed.

The crosslinkable polyvinyl acetal porous powder of the present invention is useful particularly as a binder of a crosslinkable ceramic composition for green sheets or the like. As described above, when printing a circuit on the surface of a green sheet in which conventional polyvinyl butyral is used, a part of the polyvinyl butyral is undesirably dissolved in an organic solvent present in a conductor paste, and thus the green sheet using polyvinyl butyral has been desired to have high solvent resistance. In addition, recently, reduction in size and thickness of multilayer ceramic capacitors are increasingly desired. Therefore, for the purpose of strengthening downsized and thinned green sheets, studies have been made to use polyvinyl butyral having a high polymerization degree. However, the molecular weight of polyvinyl butyral to be used is high, and thus the solution viscosity of the ceramic slurry is increased, which relates to workability. Accordingly, considering the application to multilayer ceramic capacitors, it is preferable that a green sheet having high strength be obtained without using polyvinyl butyral having the high molecular weight.

In contrast, use of the crosslinkable polyvinyl acetal porous powder of the present invention as a binder for green sheets allows the following advantages to be obtained. That is, a thermally-crosslinkable ceramic composition (slurry) or a photo-crosslinkable ceramic composition (slurry) (hereinafter, which may be collectively referred to as a thermally/photo-crosslinkable ceramic composition) that has been prepared using the crosslinkable polyvinyl acetal porous powder of the present invention has a viscosity as low as a slurry obtained using normal polyvinyl acetal. Thus, the workability thereof is excellent. After producing a thermally/photo-crosslinkable ceramic green sheet using this slurry, it is subjected to UV crosslinking treatment, electron beam crosslinking treatment, thermal crosslinking treatment, or the like, thereby allowing a thermally/photo-crosslinked ceramic green sheet to be obtained. The thermally/photo-crosslinked ceramic green sheet is strengthened by crosslinking and therefore is used suitably for downsized and thinned ceramic green sheets. Further, it also has solvent resistance. Thus, when printing a circuit on the surface of the green sheet, printing is very clear and free from defects such as pinholes caused by dissolving of the green sheet. Moreover, the crosslinkable polyvinyl acetal porous powder of the present invention is excellent also in washability after the production, and thus it is advantageous also in that it contains a small amount of impurities that lead to defects of green sheets. Detailed description is as follows.

The thermally/photo-crosslinkable ceramic composition of the present invention is obtained by dispersing and dissolving the crosslinkable polyvinyl acetal porous powder described herein and ceramic powder in an appropriate solvent. The content of the crosslinkable polyvinyl acetal porous powder is preferably 1 to 20 wt%, more preferably 3 to 17 wt%, with respect to the thermally/photo-crosslinkable ceramic composition.

The solvent to be used for thermally/photo-crosslinkable ceramic composition of the present invention is not specifically limited, as long as the crosslinkable polyvinyl acetal porous powder, the after-mentioned plasticizer, dispersant, crosslinking initiator, and other additives are soluble therein. Preferable examples thereof include ethanol, propanol, butanol, methanol, toluene, xylene, acetone, methyl ethyl ketone, dioxane, tetrahydrofuran, and ethyl acetate. Two or more kinds of the solvents may be mixed for use. The amount of the solvent to be used is preferably 10 to 80 wt%, more preferably 15 to 70 wt% in the thermally/photo-crosslinkable ceramic composition.

The kind of the ceramic powder to be used for the thermally/photo-crosslinkable ceramic composition of the present invention is not specifically limited. Examples thereof include powder of barium titanate, alumina, zirconia, aluminum silicate, titanium oxide, zinc oxide, magnesia, sialon, spinel, mullite, glass, silicon carbide, silicon nitride, and aluminum nitride. Two or more kinds of them may be used in combination.

The amount of the ceramic powder to be used is not specifically limited, but it is preferably 20 to 80 wt%, more preferably 30 to 75 wt% in the thermally/photo-crosslinkable ceramic composition.

The average particle size of the above-mentioned ceramic powder is appropriately selected depending on the thickness of the thermally/photo-crosslinked ceramic green sheet to be produced. It is preferably 10 $\mu$m or less, more preferably 1 $\mu$m or less.

A plasticizer may be added to the thermally/photo-crosslinkable ceramic composition of the present invention, as needed. The kind of the plasticizer is not specifically limited. Examples thereof include phthalate plasticizers such as dioctyl phthalate, benzyl butyl phthalate, dibutyl phthalate, dihexyl phthalate, di(2-ethylhexyl) phthalate, and di(2-ethylbutyl) phthalate, adipate plasticizers such as dihexyl adipate, glycol plasticizers such as ethylene glycol, diethylene glycol, and triethylene glycol, and glycol ester plasticizers such as triethylene glycol dibutyrate, triethylene glycol di(2-ethylbutyrate), and triethylene glycol di(2-ethylhexanoate). Two or more kinds of them may be used in combination. The amount of the plasticizer to be used is not specifically limited, but it is preferably 0.1 to 10 wt%, more preferably 1 to 8 wt%, in the thermally/photo-crosslinkable ceramic composition.

A crosslinking initiator may be added to the thermally/photo-crosslinkable ceramic composition of the present invention, as needed. The kind of the crosslinking initiator to be added may be appropriately selected depending on the crosslinking method. The afore-mentioned crosslinking initiator may be used therefor, for example. The amount of the crosslinking initiator to be used is not specifically limited, but it is preferably 0.001 to 1 wt%, more preferably 0.01 to 0.5 wt%, in the thermally/photo-crosslinkable ceramic composition.

The thermally/photo-crosslinkable ceramic composition of the present invention may contain a dispersant, a lubricant agent, an antistatic agent, an antifoaming agent, or the like, as needed. The amount of these to be added is preferably 0.1 to 3 wt%, more preferably 0.1 to 1 wt%, with respect to the thermally/photo-crosslinkable ceramic composition.

According to the thermally/photo-crosslinkable ceramic composition of the present invention, the crosslinkable polyvinyl acetal porous powder described herein, ceramic powder, and other additives are mixed with an appropriate solvent at 0 to 100°C for 1 to 100 hours using, for example, a ball mill, followed by degassing as needed. Thereafter, it is applied onto a substrate having excellent release property such as a polyester film, followed by drying of the organic solvent, so that the thermally/photo-crosslinkable ceramic composition of the present invention forms the thermally/photo-crosslinkable ceramic green sheet described herein.

The thermally/photo-crosslinkable ceramic green sheet thus obtained is subjected to photoirradiation such as UV irradiation, electron beam irradiation, thermal treatment or the like, thereby allowing a thermally/photo-crosslinked ceramic green sheet to be obtained. These are preferable in view of strengthening the ceramic green sheet, and providing solvent resistance.

The crosslinkable polyvinyl acetal porous powder of the present invention is useful also as a crosslinkable powder coating. Polyvinyl acetal is generally easy to dissolve in a polar organic solvent, particularly in a lower alcohol such as ethanol, and propanol, as its property. However, in the case of carrying out coating using a powder coating mainly containing the crosslinkable polyvinyl acetal porous powder of the present invention, followed by photoirradiation, thermal treatment, or the like of the coating, the coating film is provided with a crosslinked structure formed between molecules of the polyvinyl acetal resin, thereby bringing about solvent resistance to the coating film. Hereinafter, the crosslinkable powder coating using the crosslinkable polyvinyl acetal porous powder of the present invention is described.

The crosslinkable polyvinyl acetal porous powder to be used for the powder coating containing crosslinkable polyvinyl acetal may have an average particle size of, preferably 250 $\mu$m or less, and more preferably 150 $\mu$m or less, most preferably 100 $\mu$m or less. In the case that the crosslinkable polyvinyl acetal porous powder is obtained as powder having such average particle size, it can be used as a powder coating as it is. Alternatively, as needed, it can be adjusted to have the above-mentioned average particle size by a method such as crushing, spray drying, VAMP, and sieving classification. If the average particle size is in this range, a coating film formed by the powder coating can be obtained having a uniform thickness.

The average particle size of the crosslinkable polyvinyl acetal porous powder to be used for the powder coating can be determined by, for example, measurement using the afore-mentioned laser diffraction method.

The afore-mentioned crosslinking initiator may be added to the crosslinkable powder coating of the present invention, as needed. The method for adding the crosslinking initiator thereto is not specifically limited. For example, the crosslinking initiator may be included in a powder composed of crosslinkable polyvinyl acetal, or a powder composed of crosslinkable polyvinyl acetal may be dry-blended with a powder including the crosslinking initiator.

In the crosslinkable powder coating of the present invention, the crosslinkable polyvinyl acetal porous powder is used as an essential component of the resin component. In addition to this, other resins, coloring pigments, an antioxidant, a plasticizer, a flow modifier, and other additives may be used as needed, without impairing the effects of the present invention. The addition method thereof is not specifically limited. For example, they may be included in a powder composed of a crosslinkable polyvinyl acetal porous powder, or a powder composed of a crosslinkable polyvinyl acetal porous powder may be dry-blended with a powder including the additives.

Further, the crosslinkable polyvinyl acetal porous powder has a water content of, preferably 2.5 wt% or less, more preferably 2.0 wt% or less, in view of the surface smoothness of the coating film to be formed.

The powder coating containing the crosslinkable polyvinyl acetal porous powder of the present invention can be applied to a substrate by various methods. Examples of the method include fluidized-bed coating, electrostatic coating, and thermal spraying. The temperature condition in the application is preferably 100 to 300°C, although it may vary depending on the kind of the application method to be employed or the crosslinkable polyvinyl acetal porous powder to be used.

Examples of the substrate to be coated in the present invention include potteries, ceramics, glasses, plastics and the like in addition to metals such as a steel tube and a steel plate. Generally, in the case of applying a powder coating to these metals, pretreatments such as degreasing, treatment with phosphoric acid salts, and metal plating, or primer treatments by applying, for example, an epoxy resin are carried out as needed, in the expectation that the adhesion between the metal and the coating film, the corrosion resistance of the metal, and the appearance would be improved. By applying the powder coating mainly containing the crosslinkable polyvinyl acetal of the present invention to the surface of the substrate, a multilayer structure can be obtained. In this case, a multilayer structure with other resin layers may be formed as needed. The method for forming the multilayer structure is not specifically limited. For example, there are a method in which the powder coating is applied several times, and a method in which a mixture composed of the powder coating of the present invention and other resins are melted, causing phase separation to occur due to the difference in affinity, so that two or more resin layers are obtained by one-time application. Among these, the method in which the powder coating is applied several times is preferable because there is no need for considering the difference in affinity between the resins.

Hereafter, the present invention is described further in detail by way of examples, but the present invention is not limited by these examples in any way. In the following examples, "%" and "part(s)" denote "wt%" and "part(s) by weight" respectively, unless otherwise specified. Further," mol% "is a value with respect to the total of -CH$_2$-CH- units in the main chain of polyvinyl alcohol or polyvinyl acetal, unless otherwise specified.

Crosslinkable polyvinyl butyral porous powder obtained by the afore-mentioned method (A)

Example 1 (Preparation of polyvinyl butyral porous powder)

4050 g of ion-exchanged water and 330 g of polyvinyl alcohol (PVA-1: with a polymerization degree of 1700 and a saponification degree of 98 mol%) were put into a 5 L (liter) glass container equipped with a reflux condenser, a thermometer and an anchor-shaped stirrer blade (PVA concentration of 7.5%). Then, the content was heated to 95°C so that the PVA was dissolved completely. Subsequently, it was gradually cooled to 10°C taking about 30 minutes under stirring at 120 rpm, followed by addition of 192 g of butyl aldehyde and 270 mL of 20% hydrochloric acid, and butyralization reaction was carried out for 150 minutes. Thereafter, the temperature was raised to 50°C taking 60 minutes, and maintained at 50°C for 120 minutes. Then it was cooled to room temperature. After washing the precipitated resin with ion-exchanged water, an excess amount of an aqueous sodium hydroxide solution was added thereto, followed by washing again, and drying. Thus polyvinyl butyral porous powder (PVB-1) was obtained. The obtained PVB-1 had a butyralization degree of 69 mol%, a content of vinyl acetate units of 2 mol%, and a content of vinyl alcohol groups of 29 mol%. Further, the average particle size of the primary particles of the PVB-1 was 4.0 μm, the average particle size of the aggregated particles (secondary particles) thereof was 107 μm, and the bulk density thereof was 0.21 g/mL.

It should be noted that the butyralization degree, the content of the residual vinyl acetate units, the average particle size of the primary particles, the average particle size of the aggregated particles, and the bulk density of the polyvinyl butyral porous powder each were determined by the following method.

(Measurement of butyralization degree and content of vinyl acetate units of polyvinyl butyral porous powder)

The measurement was carried out according to JIS K6728.

(Measurement of average particle size of primary particles of polyvinyl butyral porous powder)

The measurement was carried out with a scanning electron microscope (SEM) by taking 3 photographs (3 pieces) of the polyvinyl butyral porous powder at 1000-fold magnification, measuring each particle size of the primary particles that had been selected to be determinable from the obtained images (50 particles per 1 image), and calculating the mean value as the average particle size. The major axis of the primary particle was measured as the particle size.

(Average particle size of aggregated particles of polyvinyl butyral porous powder)

The measurement was carried out using a particle size distribution analyzer, SALD2200, manufactured by SHIMADZU CORPORATION.

(Measurement of bulk density of polyvinyl butyral porous powder)

The measurement was carried out according to JIS K6721.

(Production of crosslinkable polyvinyl butyral porous powder)

900 g of hexane and 100 g of methyl ethyl ketone (MEK) were put into a 2 L separable flask. Then 200 g of the PVB-1 was added thereto under stirring, so as to be dispersed (a solid content concentration of 17%). 30.5 g (10 mol%) of maleic acid anhydride, 3.0 g (1.0 mol%, 10 mol% with respect to the maleic acid anhydride) of triethyl amine, and 0.1 g of 4-methoxyphenol were added thereto and reaction was carried out at 25°C for 5 hours in a heterogeneous system. After the reaction, the resultant product was filtered, and washed 5 times with 2 L of distilled water, followed by drying. Thus, a crosslinkable polyvinyl butyral porous powder 1 was obtained.

The average particle size of the primary particles, the average particle size of the secondary particles, and the bulk density of the obtained crosslinkable polyvinyl butyral porous powder 1 were determined by the same method as in the PVB-1.

As to the crosslinkable polyvinyl butyral porous powder 1, the introduction amount of crosslinkable functional groups, the ratio expressed by the formula [amount of carboxylate groups/(total amount of carboxyl groups and carboxylate groups)], and the amount of residual monomers were determined and the solvent solubility was evaluated, according to the following method.

(Introduction amount of crosslinkable functional groups)

A 2% dimethyl sulfoxide-$d_6$ solution of the crosslinkable polyvinyl butyral porous powder 1 was prepared, and the introduction amount of crosslinkable functional groups was calculated from the result of the $^1$H-NMR measurement at 80°C. The introduction amount of crosslinkable groups was calculated with respect to the (-CH$_2$-CH-) parts in the main chain of the crosslinkable polyvinyl butyral porous powder.

## ([Amount of carboxylate groups/(Total amount of carboxyl groups and carboxylate groups)])

3 g of the crosslinkable polyvinyl butyral porous powder 1 was dissolved in 100 g of ethanol. 2 drops of a phenolphthalein solution were added thereto, and it was titrated with a 0.1 mol/L aqueous sodium hydroxide solution. Subsequently, as a blank sample, 2 drops of a phenolphthalein solution were added to 100 g of ethanol, and it was titrated with a 0.1 mol/L aqueous sodium hydroxide solution. In either case, the end point was at the time that the solution turned light pink (the difference of the titer of the 0.1 mol/L sodium hydroxide solution required for each titration is taken as "titer A [mL]").

Subsequently, 3 g of the crosslinkable polyvinyl acetal porous powder 1 was dissolved in 100 g of ethanol, followed by addition of 2 drops of a thymol blue solution, and it was titrated with a 0.1 mol/L aqueous hydrochloric acid solution. Subsequently, as a blank sample, 2 drops of a thymol blue solution were added to 100 g of ethanol, and it was titrated with a 0.1 mol/L aqueous hydrochloric acid solution. In either case, the end point was at the time that the solution turned from yellow to orange (the difference of the titer of the 0.1 mol/L aqueous hydrochloric acid solution required for each titration is taken as "titer B [mL]").

$$[(\text{Amount of carboxylate groups})/(\text{Total amount of carboxyl groups and carboxylate groups})] = (\text{Titer B})/(\text{Titer A} + \text{Titer B})$$

(Amount of residual monomers)

1 g of the crosslinkable polyvinyl butyral porous powder 1 was put into a vial container, followed by addition of 10 $\mu$L of a 0.4% octane/acetone solution as an internal standard. A headspace gas chromatography measurement was carried out so that the amount of the residual monomers was calculated according to the following formula.

$$(\text{Amount of residual monomers}) = (\text{Total area values of residual monomers})/(\text{Octane area value})$$

(Evaluation of solvent solubility)

200 mL of ethanol was put into a 500 mL separable flask, and 6 g of the crosslinkable polyvinyl butyral porous powder 1 was added thereto under stirring at 200 rpm while being maintained at 50°C. The time required for the dissolution was measured (in which the addition completion time was taken as the starting point of the dissolution time measurement), and evaluated based of the following criteria.

◎ : Dissolution completion time was less than 15 minutes.
○: Dissolution completion time was not less than 15 minutes but less than 30 minutes.
Δ: Dissolution completion time was not less than 30 minutes but not more than 2 hours.
×: Dissolution was not completed after 2 hours (undissolved residues were observed).
The time that the solid objects have become invisible by visual inspection was taken as the dissolution completion time.
The moisture absorption of the crosslinkable polyvinyl acetal porous powder was determined using the following method.
5 g of the dried crosslinkable polyvinyl acetal porous powder 1 (with the moisture content of 0.1 wt% or less) was treated at 40°C under 90% RH for 48 hours, and the amount of moisture absorption of the crosslinkable polyvinyl acetal porous powder was measured from the change in weight before and after the treatment. As a result, the amount of moisture absorption was 2.1% with respect to the weight of the crosslinkable polyvinyl acetal porous powder.

(Production of UV cured film)

2 g of the crosslinkable polyvinyl butyral porous powder 1 and 0.1 g of 2-hydroxy-4'-(2-hydroxyethoxy)-2-methylpropiophenone were dissolved in 50 g of ethanol, and an appropriate amount of the resultant solution was poured into a mold, followed by drying. Thus a cast film having a thickness of 100 $\mu$m was obtained. The cast film was peeled off from the mold, and irradiated with UV light using an ultraviolet irradiator, TOSCURE 1000 manufactured by TOSHIBA CORPORATION (at 2 meters/minute, 10 times). Thus a UV cured film was produced.

(Production of thermally cured film 1)

2 g of the crosslinkable polyvinyl butyral porous powder 1 and 0.1 g of $\alpha,\alpha$-azobisisobutyronitrile were dissolved in 50 g of ethanol, and an appropriate amount of the resultant solution was poured into a mold, followed by drying. Thus a cast film having a thickness of 100 $\mu$m was obtained. The cast film was peeled off from the mold, and subjected to thermal treatment at 80°C for 1 hour. Thus a thermally cured film 1 was produced.

(Production of thermally cured film 2)

8.5 g of the crosslinkable polyvinyl acetal porous powder 1 was hot-pressed in a mold having a size of 10 cm × 8 cm × 0.1 cm at 200°C under 12 kg/cm² for 30 minutes. Thus a thermally cured film 2 was produced.
The three kinds of the cured films thus obtained were evaluated for solvent resistance, using the following method. In addition, the YI (yellow index) of the thermally cured film 2 was measured with a color meter, SM-T-H1, manufactured by Suga Test Instruments Co., Ltd.. Further, the haze of the thermally cured film 2 that had been treated at 40°C under an atmosphere of 90% RH for 48 hours was evaluated with a haze meter, HZ-1, manufactured by Suga Test Instruments Co., Ltd..

(Evaluation of cured film for solvent resistance)

0.3 g of the cured film (which is taken as the weight of the cured film) was immersed in 100 g of ethanol, and it was allowed to stand still at 50°C for 2 hours. The residual cured film in the ethanol was taken out, and the weight was measured (which is taken as the film weight before drying). Further, the film taken out was dried at 105°C for 3 hours, and the weight was measured (which is taken as the film weight after drying). The swelling degree and the residual ratio were calculated from the following formula.

$$(\text{Swelling degree of film}) = (\text{Film weight before drying})/(\text{Film weight after drying})$$

$$(\text{Residual ratio of film}) = (\text{Film weight after drying})/(\text{Weight of cured film}) \times 100(\%)$$

Table 1 and Table 2 indicate the evaluation results.

Example 2

Polyvinyl butyral porous powder (PVB-2) was obtained in the same manner as in Example 1, except that polyvinyl alcohol (PVA-2: with a polymerization degree of 500 and a saponification degree of 98 mol%) was used instead of the polyvinyl alcohol (PVA-1) in Example 1, and the temperature at the time of cooling was changed to 3°C.
A crosslinkable polyvinyl butyral porous powder 2 was obtained in the same manner as in Example 1, except that the PVB-2 was used instead of the PVB-1, 950 g of hexane and 50 g of MEK were used, and 14.7 g (4.8 mol%) of a maleic acid anhydride was used.
Subsequently, cured films were produced using the crosslinkable polyvinyl butyral porous powder 2, in the same manner as in Example 1.
Table 1 and Table 2 indicate the measurement and evaluation results of the crosslinkable polyvinyl butyral porous powder 2 and the evaluation results of the cured films that were obtained from the same method as in Example 1.

Example 3

A crosslinkable polyvinyl butyral porous powder 3 was obtained in the same manner as in Example 1, except that 100 g of the PVB-1, 450 g of hexane and 50 g of MEK were used, 16.3 g (10 mol%) of methacrylic acid chloride was used instead of the maleic acid anhydride, the reaction temperature was changed to 40°C, and the reaction time was changed to 3 hours in Example 1.
Subsequently, a UV cured film and a thermally cured film 1 were produced using the crosslinkable polyvinyl butyral porous powder 3, in the same manner as in Example 1.
Table 1 and Table 2 indicate the measurement and evaluation results of the crosslinkable polyvinyl butyral porous powder 3 and the evaluation results of the cured films that were obtained from the same method as in Example 1.

Example 4

A polyvinyl butyral porous powder (PVB-3) was obtained in the same manner as in Example 1, except that the temperature at the time of cooling was changed from 10°C to 1°C in Example 1.
Using the PVB-3, a crosslinkable polyvinyl butyral porous powder 4 was obtained in the same manner as in Example 1.
Subsequently, cured films were produced using the crosslinkable polyvinyl butyral porous powder 4, in the same manner as in Example 1.
Table 1 and Table 2 indicate the measurement and evaluation results of the crosslinkable polyvinyl butyral porous powder 4 and the evaluation results of the cured films that were obtained from the same method as in Example 1.

Example 5

15.9 g of the crosslinkable polyvinyl butyral porous powder 1 obtained in Example 1 was pressed in a mold having a size of 10 cm × 10 cm × 1 mm under the pressure of 25 kg/cm$^2$ at 25°C for 15 minutes. Thus a crosslinkable polyvinyl butyral porous plate having a thickness of about 1 mm was obtained. 5 copies were produced and crushed for 5 minutes with a mixer. Thus a crosslinkable polyvinyl butyral porous powder 5 was obtained.

Subsequently, cured films were produced using the crosslinkable polyvinyl butyral porous powder 5, in the same manner as in Example 1.

Table 1 and Table 2 indicate the measurement and evaluation results of the crosslinkable polyvinyl butyral porous powder 5 and the evaluation results of the cured films that were obtained from the same method as in Example 1.

Example 6

5.0 g of the crosslinkable polyvinyl butyral porous powder 1 obtained in Example 1 was pressed in a mold having a size of 10 cm × 10 cm × 1 mm under the pressure of 25 kg/cm$^2$ at 25°C for 10 minutes. Thus a crosslinkable polyvinyl butyral porous plate having a thickness of about 1 mm was obtained. 5 copies were produced and crushed for 5 minutes with a mixer. Thus a crosslinkable polyvinyl butyral porous powder 6 was obtained.

Subsequently, cured films were produced using the crosslinkable polyvinyl butyral porous powder 6, in the same manner as in Example 1.

Table 1 and Table 2 indicate the measurement and evaluation results of the crosslinkable polyvinyl butyral porous powder 6 and the evaluation results of the cured films that were obtained from the same method as in Example 1.

Example 7

A polyvinyl butyral porous powder (PVB-4) was obtained in the same manner as in Example 2, except that the temperature at the time of cooling was changed to 5°C.

A crosslinkable polyvinyl acetal porous powder 7 was obtained in the same manner as in Example 2, except that the PVB-4 was used instead of the PVB-2, 30.5 g (10 mol%) of maleic acid anhydride, and 1.6 g (0.5 mol%, 5 mol% with respect to the maleic acid anhydride) of triethyl amine were used in Example 2.

Subsequently, cured films were produced using the crosslinkable polyvinyl butyral porous powder 7, in the same manner as in Example 1.

Table 1 and Table 2 indicate the measurement and evaluation results of the crosslinkable polyvinyl butyral porous powder 7 and the evaluation results of the cured films that were obtained from the same method as in Example 1.

Example 8

A crosslinkable polyvinyl butyral porous powder 8 was obtained in the same manner as in Example 7, except that the PVB-1 was used instead of the PVB-4.

Subsequently, cured films were produced using the crosslinkable polyvinyl butyral porous powder 8, in the same manner as in Example 1.

Table 1 and Table 2 indicate the measurement and evaluation results of the crosslinkable polyvinyl butyral porous powder 8 and the evaluation results of the cured films that were obtained from the same method as in Example 1.

Example 9

A crosslinkable polyvinyl butyral porous powder 9 was obtained in the same manner as in Example 7, except that the used amount of triethyl amine was changed to 3.1 g (1 mol%, 10 mol% with respect to the maleic acid anhydride).

Subsequently, cured films were produced using the crosslinkable polyvinyl butyral porous powder 9, in the same manner as in Example 1.

Table 1 and Table 2 indicate the measurement and evaluation results of the crosslinkable polyvinyl butyral porous powder 9 and the evaluation results of the cured films that were obtained from the same method as in Example 1.

Example 10

A crosslinkable polyvinyl butyral porous powder 10 was obtained in the same manner as in Example 7, except that the used amount of triethyl amine was changed to 6.2 g (2 mol%, 20 mol% with respect to the maleic acid anhydride).

Subsequently, cured films were produced using the crosslinkable polyvinyl butyral porous powder 10, in the same manner as in Example 1.

Table 1 and Table 2 indicate the measurement and evaluation results of the crosslinkable polyvinyl butyral porous powder 10 and the evaluation results of the cured films that were obtained from the same method as in Example 1.

Example 11

A crosslinkable polyvinyl butyral porous powder 11 was obtained in the same manner as in Example 7, except that the used amount of maleic acid anhydride was changed to 21.4 g (7 mol%) and the used amount of triethyl amine was changed to 1.2 g (0.4 mol%, 6 mol% with respect to the maleic acid anhydride).
Subsequently, cured films were produced using the crosslinkable polyvinyl butyral porous powder 11, in the same manner as in Example 1.
Table 1 and Table 2 indicate the measurement and evaluation results of the crosslinkable polyvinyl butyral porous powder 11 and the evaluation results of the cured films that were obtained from the same method as in Example 1.

Example 12

A crosslinkable polyvinyl butyral porous powder 12 was obtained in the same manner as in Example 7, except that the used amount of maleic acid anhydride was changed to 12.2 g (4 mol%) and the used amount of triethyl amine was changed to 0.6 g (0.2 mol%, 5 mol% with respect to the maleic acid anhydride).
Subsequently, cured films were produced using the crosslinkable polyvinyl butyral porous powder 12, in the same manner as in Example 1.
Table 1 and Table 2 indicate the measurement and evaluation results of the crosslinkable polyvinyl butyral porous powder 12 and the evaluation results of the cured films that were obtained from the same method as in Example 1.

Example 13

A crosslinkable polyvinyl butyral porous powder 13 was obtained in the same manner as in Example 1, except that the used amount of maleic acid anhydride was changed to 6.1 g (2 mol%) and the used amount of triethyl amine was changed to 0.3 g (0.1 mol%, 5 mol% with respect to the maleic acid anhydride).
Subsequently, cured films were produced using the crosslinkable polyvinyl butyral porous powder 13, in the same manner as in Example 1.
Table 1 and Table 2 indicate the measurement and evaluation results of the crosslinkable polyvinyl butyral porous powder 13 and the evaluation results of the cured films that were obtained from the same method as in Example 1.

Example 14

5.9 g of the crosslinkable polyvinyl butyral porous powder 7 obtained in Example 7 was pressed in a mold having a size of 10 cm $\times$ 10 cm $\times$ 1 mm under the pressure of 25 kg/cm$^2$ at 25°C for 15 minutes. Thus a crosslinkable polyvinyl butyral porous plate having a thickness of about 1 mm was obtained. 5 copies were produced and crushed for 5 minutes with a mixer. Thus a crosslinkable polyvinyl butyral porous powder 14 was obtained.
Table 1 indicates the measurement and evaluation results of the crosslinkable polyvinyl butyral porous powder 14 that were obtained from the same method as in Example 1.

Example 15

A crosslinkable polyvinyl acetal porous powder 15 was obtained in the same manner as in Example 14, except that the crushing time with a mixer was changed to 2 minutes.
Table 1 indicates the measurement and evaluation results of the crosslinkable polyvinyl butyral porous powder 15 that were obtained from the same method as in Example 1.

Example 16

A crosslinkable polyvinyl acetal porous powder 16 was obtained in the same manner as in Example 14, except that the crushing time with a mixer was changed to 1 minute.
Table 1 indicates the measurement and evaluation results of the crosslinkable polyvinyl butyral porous powder 16 that were obtained from the same method as in Example 1.

Example 17

A crosslinkable polyvinyl acetal porous powder 17 was obtained in the same manner as in Example 14, except that the crushing time with a mixer was changed to 30 seconds.

Table 1 indicates the measurement and evaluation results of the crosslinkable polyvinyl butyral porous powder 17 that were obtained from the same method as in Example 1.

Example 18

A crosslinkable polyvinyl butyral porous powder 18 was obtained in the same manner as in Example 7, except that 15.6 g (5 mol%) of succinic acid anhydride was used instead of maleic acid anhydride, and 1.6 g (0.5 mol%, 10 mol% with respect to the succinic acid anhydride) of triethyl amine was used.

Subsequently, a thermally cured film 2 was produced using the crosslinkable polyvinyl butyral porous powder 18, in the same manner as in Example 1.

Table 1 and Table 2 indicate the measurement and evaluation results of the crosslinkable polyvinyl butyral porous powder 18 and the evaluation results of the thermally cured film 2 that were obtained from the same method as in Example 1.

Example 19

A crosslinkable polyvinyl butyral porous powder 19 was obtained in the same manner as in Example 18, except that the used amount of triethyl amine was changed to 3.1 g (1 mol%, 20 mol% with respect to the succinic acid anhydride).

Subsequently, a thermally cured film 2 was produced using the crosslinkable polyvinyl butyral porous powder 19, in the same manner as in Example 1.

Table 1 and Table 2 indicate the measurement and evaluation results of the crosslinkable polyvinyl butyral porous powder 19 and the evaluation results of the thermally cured film 2 that were obtained from the same method as in Example 1.

Example 20

A crosslinkable polyvinyl butyral porous powder 20 was obtained in the same manner as in Example 7, except that 32.5 g (10 mol%) of methacrylic acid chloride was used instead of maleic acid anhydride, and the reaction temperature at the time of producing the crosslinkable polyvinyl acetal porous powder was changed to 40°C.

Subsequently, a UV cured film and a thermally cured film 1 were produced using the crosslinkable polyvinyl butyral porous powder 20, in the same manner as in Example 1.

Table 1 and Table 2 indicate the measurement and evaluation results of the crosslinkable polyvinyl butyral porous powder 20 and the evaluation results of the cured films that were obtained from the same method as in Example 1.

Example 21

A crosslinkable polyvinyl butyral porous powder 21 was obtained in the same manner as in Example 20, except that the reaction temperature at the time of producing the crosslinkable polyvinyl acetal porous powder was changed to 15°C.

Subsequently, a UV cured film and a thermally cured film 1 were produced using the crosslinkable polyvinyl butyral porous powder 21, in the same manner as in Example 1.

Table 1 and Table 2 indicate the measurement and evaluation results of the crosslinkable polyvinyl butyral porous powder 21 and the evaluation results of the cured films that were obtained from the same method as in Example 1.

Example 22

A crosslinkable polyvinyl butyral porous powder 22 was obtained in the same manner as in Example 20, except that the reaction temperature at the time of synthesizing the crosslinkable polyvinyl acetal porous powder was changed to 0°C.

Subsequently, a UV cured film and a thermally cured film 1 were produced using the crosslinkable polyvinyl butyral porous powder 22, in the same manner as in Example 1.

Table 1 and Table 2 indicate the measurement and evaluation results of the crosslinkable polyvinyl butyral porous powder 22 and the evaluation results of the cured films that were obtained from the same method as in Example 1.

Example 23

A crosslinkable polyvinyl butyral porous powder 23 was obtained in the same manner as in Example 7, except that 51.8 g (10 mol%) of cinnamic acid chloride was used instead of maleic acid anhydride, and the reaction temperature at the time of producing the crosslinkable polyvinyl acetal porous powder was changed to 20°C.

Subsequently, a UV cured film and a thermally cured film 1 were produced using the crosslinkable polyvinyl butyral porous powder 23, in the same manner as in Example 1.

Table 1 and Table 2 indicate the measurement and evaluation results of the crosslinkable polyvinyl butyral porous powder 23 and the evaluation results of the cured films that were obtained from the same method as in Example 1.

Example 24

PVB-5 was obtained in the same manner as in Example 1, except that the used amount of triethyl amine was changed to 15.7 g (5 mol%, 50 mol% with respect to the maleic acid anhydride).

Subsequently, cured films were produced using the PVB-5, in the same manner as in Example 1.

Table 1 and Table 2 indicate the measurement and evaluation results of the PVB-5 and the evaluation results of the cured films that were obtained from the same method as in Example 1.

Example 25

PVB-6 was obtained in the same manner as in Example 1, except that the used amount of triethyl amine was changed to 31.4 g (10 mol%, 100 mol% with respect to the maleic acid anhydride).

Subsequently, cured films were produced using the PVB-6, in the same manner as in Example 1.

Table 1 and Table 2 indicate the measurement and evaluation results of the PVB-6 and the evaluation results of the cured films that were obtained from the same method as in Example 1.

Comparative Example 1

1350 g of ion-exchanged water and 110 g of polyvinyl alcohol (PVA-1: with a polymerization degree of 1700 and a saponification degree of 98 mol%) were put into a 2 L glass container equipped with a reflux condenser, a thermometer and an anchor-shaped stirrer blade (PVA concentration of 7.5%). Then, the whole was heated to 95°C so that the PVA was dissolved completely. Subsequently, 21 g of maleic acid (7.2 mol% with respect to -$CH_2$-CH- units in the main chain of polyvinyl alcohol) was added thereto, and reaction was carried out at 90°C for 3 hours in a homogeneous system. Subsequently, it was gradually cooled to 10°C taking about 30 minutes under stirring at 120 rpm, followed by addition of 64 g of butyl aldehyde and 90 mL of 20% hydrochloric acid, and butyralization reaction was carried out for 150 minutes. Thereafter, the temperature was raised to 50°C taking 60 minutes, and maintained at 50°C for 120 minutes. Then it was cooled to room temperature. After washing the precipitated resin with ion-exchanged water, an aqueous sodium hydroxide solution was added thereto, followed by washing again, and drying. Thus a polyvinyl butyral porous powder (PVB-7) was obtained. The obtained PVB-7 had a butyralization degree of 68 mol%, a content of the residual vinyl acetate units of 2 mol%, and an amount of maleic acid modification of 0.2 mol%. Further, the average particle size of the primary particles of the PVB-7 was 3.5 $\mu$m, the average particle size of the aggregated particles (secondary particles) thereof was 105 $\mu$m, and the bulk density thereof was 0.21 g/mL.

Subsequently, cured films were produced using the PVB-7, in the same manner as in Example 1.

Table 1 and Table 2 indicate the measurement and evaluation results of the PVB-7 and the evaluation results of the cured films that were obtained from the same method as in Example 1.

Comparative Example 2

500 g of methyl ethyl ketone (MEK) was put into a 1 L separable flask. Then 20 g of the polyvinyl butyral porous powder (PVB-1) obtained in Example 1 was added thereto under stirring, so as to be dissolved. In addition, 3.1 g (10 mol%) of maleic acid anhydride, 0.5 g (1.6 mol%, 16 mol% with respect to the maleic acid anhydride) of triethyl amine (catalyst), and 0.1 g of 4-methoxyphenol were added thereto and reaction was carried out at 25°C for 6 hours in a homogeneous system. Thus an MEK solution 1 containing crosslinkable polyvinyl butyral was obtained.

As to the obtained MEK solution 1 containing crosslinkable polyvinyl butyral, the introduction amount of crosslinkable functional groups, and the amount of residual monomers were determined according to the following method.

(Introduction amount of crosslinkable functional groups)

After sufficiently distilling off MEK from the MEK solution 1 containing crosslinkable polyvinyl butyral, a 2% dimethyl sulfoxide-$d_6$ solution of the residue was prepared, and the introduction amount of crosslinkable functional groups was calculated from the result of the $^1$H-NMR measurement at 80°C.

(Amount of residual monomers)

After sufficiently distilling off MEK from the MEK solution 1 containing crosslinkable polyvinyl butyral, 1 g of the residue was put into a vial container, followed by addition of 10 pL of a 0.4% octane/acetone solution as an internal standard. A headspace gas chromatography measurement was carried out so that the amount of the residual monomers was calculated according to the following formula.

$$\text{(Amount of residual monomers)} = \text{(Total area values of residual monomers)/(Octane area value)}$$

(Production of UV cured film)

0.1 g of 2-hydroxy-4'-(2-hydroxyethoxy)-2-methylpropiophenone was dissolved in 45 g of the MEK solution 1 containing crosslinkable polyvinyl butyral (a solid content concentration of 4.5%), and an appropriate amount of the resultant solution was poured into a mold having a size of 10 cm × 10 cm, followed by drying. Thus a cast film having a thickness of about 100 $\mu$m was obtained. The cast film was peeled off from the mold, and irradiated with UV light using an ultraviolet irradiator, TOSCURE 1000 manufactured by TOSHIBA CORPORATION (at 2 meters/minute, 10 times). Thus a UV cured film was produced.

(Production of thermally cured film 1)

0.1 g of $\alpha,\alpha$-azobisisobutyronitrile was dissolved in 45 g of the MEK solution containing crosslinkable polyvinyl butyral (a solid content concentration of 4.5%) at room temperature, and an appropriate amount of the resultant solution was poured into a mold having a size of 10 cm × 10 cm, followed by drying. Thus a cast film having a thickness of about 100 $\mu$m was obtained. The cast film was peeled off from the mold, and subjected to thermal treatment at 80°C for 1 hour. Thus a thermally cured film was produced.

(Production of thermally cured film 2)

After sufficiently distilling off MEK from 250 g of the MEK solution 1 containing crosslinkable polyvinyl butyral, 8.5 g of the obtained residue was hot-pressed in a mold having a size of 10 cm × 8 cm × 0.1 cm at 200°C under 12 kg/cm$^2$ for 30 minutes. Thus a thermally cured film 2 was produced.

The cured films thus obtained were evaluated for solvent resistance, using the same method as in Example 1.

Table 1 and Table 2 indicate the measurement and evaluation results of the residue, and the evaluation results of the cured films.

Comparative Example 3

500 g of MEK was put into a 1 L separable flask. Then 20 g of the polyvinyl butyral porous powder (PVB-1) obtained in Example 1 was added thereto under stirring, so as to be dissolved. In addition, 3.0 g (10 mol%) of maleic acid anhydride, 0.5 g (1.6 mol%, 16 mol% with respect to the maleic acid anhydride) of triethyl amine (catalyst), and 0.1 g of 4-methoxyphenol were added thereto and reaction was carried out at 25°C for 6 hours in a homogeneous system. After the reaction, the obtained solution was dropped into 3 L of hexane, followed by drying the resultant precipitate. Thus, a crosslinkable polyvinyl butyral precipitate 1 was obtained.

Subsequently, cured films were produced using the crosslinkable polyvinyl butyral precipitate 1, in the same manner as in Example 1.

Table 1 and Table 2 indicate the measurement and evaluation results of the crosslinkable polyvinyl butyral precipitate 1 and the evaluation results of the cured films that were obtained from the same method as in Example 1.

Comparative Example 4

The crosslinkable polyvinyl butyral porous powder 1 obtained in Example 1 was dissolved in ethanol to give a 5 % solution, and an appropriate amount of it was poured into a mold having a size of 10 cm $\times$ 10 cm, followed by drying at room temperature. Thus a film having a thickness of about 0.8 mm was obtained. Several copies of this were produced and cut with scissors. Thereafter, they were crushed with a mixer (for 5 minutes), so that crosslinkable polyvinyl butyral in pellet form was obtained.

Subsequently, cured films were produced using the crosslinkable polyvinyl butyral in pellet form, in the same manner as in Example 1.

Table 1 and Table 2 indicate the measurement and evaluation results of the crosslinkable polyvinyl butyral in pellet form and the evaluation results of the cured films that were obtained from the same method as in Example 1.

Comparative Example 5

The MEK solution 2 containing crosslinkable polyvinyl butyral was obtained in the same manner as in Comparative Example 2, except that the PVB-4 was used instead of the PVB-1.

Crosslinked films were produced, and the residue after distilling off MEK from the MEK solution 2 containing crosslinkable polyvinyl butyral was measured and evaluated in the same manner as in Comparative Example 2. Table 1 and Table 2 indicate the results.

Comparative Example 6

500 g of MEK was put into a 1 L separable flask. Then 20 g of the polyvinyl butyral porous powder (PVB-1) obtained in Example 1 was added thereto under stirring, so as to be dissolved. In addition, 3.1 g of maleic acid anhydride, 0.15 g (0.5 mol%, 5 mol% with respect to the maleic acid anhydride) of triethyl amine, and 0.01 g of 4-methoxyphenol were added thereto and reaction was carried out at 25°C for 6 hours in a homogeneous system. After the reaction, the obtained solution was dropped into 3 L of hexane, followed by drying the resultant precipitate. Thus, a crosslinkable polyvinyl butyral precipitate 2 was obtained.

Subsequently, cured films were produced using the crosslinkable polyvinyl butyral precipitate 2, in the same manner as in Example 1.

Table 1 and Table 2 indicate the measurement and evaluation results of the crosslinkable polyvinyl butyral precipitate 2 and the evaluation results of the cured films that were obtained from the same method as in Example 1.

Comparative Example 7

The crosslinkable polyvinyl butyral porous powder 1 obtained in Example 1 was dissolved in ethanol to give a 10 % solution, and an appropriate amount of it was poured into a mold having a size of 10 cm $\times$ 10 cm, followed by drying at room temperature. Thus a film having a thickness of about 0.8 mm was obtained. Several copies of this were produced and cut with scissors. Thereafter, they were crushed with a mixer (for 5 minutes), so that a crosslinkable polyvinyl butyral powder 1 was obtained.

Subsequently, cured films were produced using the crosslinkable polyvinyl butyral powder 1, in the same manner as in Example 1.

Table 1 indicates the measurement and evaluation results of the crosslinkable polyvinyl butyral powder 1 that were obtained from the same method as in Example 1.

Example 26 (Crosslinkable powder coating)

(Preparation of crosslinkable powder coating mainly containing crosslinkable polyvinyl acetal porous powder)

The crosslinkable polyvinyl butyral porous powder 7 was sieved with a wire mesh having a mesh size of 60 (a mesh opening of 250 $\mu$m), so that particles having a particle size of 250 $\mu$m or more were removed. Thus, a crosslinkable powder coating was obtained.

(Average particle size of crosslinkable powder coating)

The crosslinkable powder coating had an average particle size of 73 $\mu$m, which was determined using a particle size distribution analyzer, SALD2200, manufactured by SHIMADZU CORPORATION.

(Application of crosslinkable powder coating to substrate)

The surface of a stainless steel plate (SAS304) having a size of 0.8 mm (thickness) $\times$ 50 mm $\times$ 100 mm was degreased by washing with detergent. Then, the plate was washed with ion-exchanged water sufficiently, which served as a substrate. The crosslinkable powder coating was applied to the substrate by the following method using fluidized-bed coating.

The crosslinkable powder coating was put into a container equipped with a porous plate and a cylindrical spray chamber (fluidizing chamber having a height of 50 cm and a diameter of 30 cm). The crosslinkable powder coating was fluidized by introducing air through the porous plate into the spray chamber. The substrate made of a stainless plate was preheated (at a temperature of 230°C, for 10 minutes), and it was suspended in the fluidized bed of the crosslinkable powder coating. After a lapse of 10 seconds, it was taken out, and heated at a temperature of 230°C for 10 minutes. Thus a coated product was obtained.

(Evaluation of solvent resistance of coated product)

After the surface of the coated product was wiped 5 times with gauze impregnated with ethanol, the state of the coating film as of the time was observed by visual inspection. No change was observed in the surface of the coating film.

Comparative Example 8

In Example 26, the PVB-4 was used instead of the crosslinkable polyvinyl butyral porous powder 7, so that a coated product was obtained. The solvent resistance thereof was evaluated, and the surface of the coating film after the test was clouded.

Example 27 (Crosslinkable ceramic binder)

(Preparation of thermally-crosslinkable ceramic composition and production of thermally-crosslinkable ceramic green sheet)

25 g of barium titanate having a particle size of 0.1 $\mu$m (BT-01, manufactured by Sakai Chemical Industry Co., Ltd.), 15 g of ethanol, 15 g of toluene, 1 g of the crosslinkable polyvinyl butyral porous powder 1, 0.5 g of MALIALIM AKM (manufactured by NOF CORPORATION) as a dispersant, and 1 g of benzyl butyl phthalate as a plasticizer were put into a ball mill, and mixed at 20°C and 100 rpm for 20 hours. Subsequently, the obtained thermally-crosslinkable ceramic composition 1 was applied onto PET so that the thickness after drying should be 25 $\mu$m, followed by drying at 40°C for 1 hour and at 70°C for 3 hours. Thus, a thermally-crosslinkable ceramic green sheet 1 was obtained. This was subjected to thermal treatment at 180°C for 1 hour, and thus a thermally-crosslinked ceramic green sheet 1 was obtained.

(Evaluation of strength of thermally-crosslinked ceramic green sheet)

The obtained thermally-crosslinked ceramic green sheet 1 was cut into a size of 8 cm $\times$ 1 cm, and a tensile test was carried out on it at the speed of 8 mm/minute and the angle of 180° using an autograph, AG-IS, manufactured by SHIMADZU CORPORATION, until fracture occurred. The stress at the fracture was 5.0 N/mm$^2$, and the elongation of the thermally-crosslinked ceramic green sheet 1 at the fracture was 19%.

Example 28 (Crosslinkable ceramic binder)

(Preparation of thermally-crosslinkable ceramic composition and production of thermally-crosslinkable ceramic green sheet)

25 g of barium titanate having a particle size of 0.1 $\mu$m (BT-01, manufactured by Sakai Chemical Industry Co., Ltd.), 15 g of ethanol, 15 g of toluene, 1 g of the crosslinkable polyvinyl butyral porous powder 3, 0.5 g of MALIALIM AKM (manufactured by NOF CORPORATION) as a dispersant, 1 g of benzyl butyl phthalate as a plasticizer, and 0.01 g of $\alpha,\alpha$-azobisisobutyronitrile as a thermal crosslinking initiator were put into a ball mill, and mixed at 20°C and 100 rpm for 20 hours. Subsequently, the obtained thermally-crosslinkable ceramic composition 2 was applied onto PET so that the thickness after drying should be 25 $\mu$m, followed by drying at 30°C for 5 hours. Thus, a thermally-crosslinkable ceramic green sheet 2 was obtained. This was subjected to thermal treatment at 90°C for 1 hour, and thus a thermally-crosslinked ceramic green sheet 2 was obtained.

(Evaluation of strength of thermally-crosslinked ceramic green sheet)

The obtained thermally-crosslinked ceramic green sheet 2 was cut into a size of 8 cm × 1 cm, and a tensile test was carried out on it at the speed of 8 mm/minute and the angle of 180° using an autograph, AG-IS, manufactured by SHIMADZU CORPORATION, until fracture occurred. The stress at the fracture was 4.4 N/mm$^2$, and the elongation of the thermally-crosslinked ceramic green sheet 2 at the fracture was 17%.

Example 29 (Crosslinkable ceramic binder)

(Preparation of photo-crosslinkable ceramic composition and production of photo-crosslinkable ceramic green sheet)

25 g of barium titanate having a particle size of 0.1 μm (BT-01, manufactured by Sakai Chemical Industry Co., Ltd.), 15 g of ethanol, 15 g of toluene, 1 g of the crosslinkable polyvinyl acetal porous powder 3, 0.5 g of MALIALIM AKM (manufactured by NOF CORPORATION) as a dispersant, 1 g of benzyl butyl phthalate as a plasticizer, and 0.02 g of 2-hydroxy-4'-(2-hydroxyethoxy)-2-methylpropiophenone as a photocrosslinking initiator were put into a ball mill, and mixed at 100 rpm for 20 hours. Subsequently, the obtained photo-crosslinkable ceramic composition 1 was applied onto PET so that the thickness after drying should be 25 μm, followed by drying at 40°C for 3 hours and at 70°C for 5 hours. Thus, a photo-crosslinkable ceramic green sheet 1 was obtained. This was irradiated with UV light using an ultraviolet irradiator, TOSCURE 1000 manufactured by TOSHIBA CORPORATION (at 2 meters/minute, 10 times). Thus a photo-crosslinked ceramic green sheet 1 was obtained.

(Evaluation of strength of photo-crosslinked ceramic green sheet)

The obtained photo-crosslinked ceramic green sheet 1 was cut into a size of 8 cm × 1 cm, and a tensile test was carried out on it at the speed of 8 mm/minute and the angle of 180° using an autograph, AG-IS, manufactured by SHIMADZU CORPORATION, until fracture occurred. The stress at the fracture was 4.6 N/mm$^2$, and the elongation of the photo-crosslinked ceramic green sheet 1 at the fracture was 17%.

Comparative Example 9

(Preparation of ceramic slurry and ceramic green sheet)

25 g of barium titanate having a particle size of 0.1 μm (BT-01, manufactured by Sakai Chemical Industry Co., Ltd.), 15 g of ethanol, 15 g of toluene, 1 g of the PVB-1, 0.5 g of MALIALIM AKM (manufactured by NOF CORPORATION) as a dispersant, and 1 g of benzyl butyl phthalate as a plasticizer were put into a ball mill, and mixed at 100 rpm for 20 hours. Subsequently, the obtained ceramic slurry was applied onto PET so that the thickness after drying should be 25 μm, followed by drying at 40°C for 3 hours and at 70°C for 5 hours. Thus, a ceramic green sheet 1 was obtained.

(Evaluation of strength of ceramic green sheet)

The obtained ceramic green sheet 1 was cut into a size of 8 cm × 1 cm, and a tensile test was carried out on it at the speed of 8 mm/minute and the angle of 180° using an autograph, AG-IS, manufactured by SHIMADZU CORPORATION, until fracture occurred. The stress at the fracture was 3.3 N/mm$^2$, and the elongation of the ceramic green sheet 1 at the fracture was 10%.

## Table 1-1

| | POLYVINYL ACETAL POROUS POWDER AS MATERIAL | | | MODIFICATION REACTION CONDITION | | | | |
|---|---|---|---|---|---|---|---|---|
| | POLYMERIZATION DEGREE | ACETALIZATION DEGREE (mol%) | VINYL ACETATE GROUP (mol%) | MODIFICATION REACTION TEMPERATURE (°C) | COMPOUND USED FOR MODIFICATION REACTION | AMOUNT OF COMPOUND USED FOR MODIFICATION (mol%) | AMOUNT OF AMINE CATALYST USED (mol%) |
| EX. 1 | 1700 | 69 | 2 | 25 | MALEIC ACID ANHYDRIDE | 10 | 1 |
| EX. 2 | 500 | 69 | 2 | 25 | MALEIC ACID ANHYDRIDE | 4.8 | 1 |
| EX. 3 | 1700 | 69 | 2 | 40 | METHACRYLIC ACID Cl | 10 | 1 |
| EX. 4 | 1700 | 69 | 2 | 25 | MALEIC ACID ANHYDRIDE | 10 | 1 |
| EX. 5 | 1700 | 69 | 2 | 25 | MALEIC ACID ANHYDRIDE | 10 | 1 |
| EX. 6 | 1700 | 69 | 2 | 25 | MALEIC ACID ANHYDRIDE | 10 | 1 |
| EX. 7 | 500 | 69 | 2 | 25 | MALEIC ACID ANHYDRIDE | 10 | 0.5 |
| EX. 8 | 1700 | 69 | 2 | 25 | MALEIC ACID ANHYDRIDE | 10 | 0.5 |
| EX. 9 | 500 | 69 | 2 | 25 | MALEIC ACID ANHYDRIDE | 10 | 1 |
| EX. 10 | 500 | 69 | 2 | 25 | MALEIC ACID ANHYDRIDE | 10 | 2 |
| EX. 11 | 500 | 69 | 2 | 25 | MALEIC ACID ANHYDRIDE | 7 | 0.4 |
| EX. 12 | 500 | 69 | 2 | 25 | MALEIC ACID ANHYDRIDE | 4 | 0.2 |

EP 2 154 186 B1

| | | | | | | | |
|---|---|---|---|---|---|---|---|
| EX. 13 | 500 | 69 | 2 | 25 | MALEIC ACID ANHYDRIDE | 2 | 0.1 |
| EX. 14 | 500 | 69 | 2 | 25 | MALEIC ACID ANHYDRIDE | 10 | 0.5 |
| EX. 15 | 500 | 69 | 2 | 25 | MALEIC ACID ANHYDRIDE | 10 | 0.5 |
| EX. 16 | 500 | 69 | 2 | 25 | MALEIC ACID ANHYDRIDE | 10 | 0.5 |
| EX. 17 | 500 | 69 | 2 | 25 | MALEIC ACID ANHYDRIDE | 10 | 0.5 |
| EX. 18 | 500 | 69 | 2 | 25 | SUCCINIC ACID ANHYDRIDE | 5 | 0.5 |
| EX. 19 | 500 | 69 | 2 | 25 | SUCCINIC ACID ANHYDRIDE | 5 | 1 |
| EX. 20 | 500 | 69 | 2 | 40 | METHACRYLIC ACID Cl | 10 | 0.5 |
| EX. 21 | 500 | 69 | 2 | 15 | METHACRYLIC ACID Cl | 10 | 0.5 |
| EX. 22 | 500 | 69 | 2 | 0 | METHACRYLIC ACID Cl | 10 | 0.5 |
| EX. 23 | 500 | 69 | 2 | 20 | CINNAMIC ACID Cl | 10 | 0.5 |
| EX. 24 | 500 | 69 | 2 | 25 | MALEIC ACID ANHYDRIDE | 10 | 5 |
| EX. 25 | 500 | 69 | 2 | 25 | MALEIC ACID ANHYDRIDE | 10 | 10 |
| C.EX. 1 | 1700 | 68 | 2 | 90 | MALEIC ACID | 7.2 | - |
| C.EX. 2 | 1700 | 69 | 2 | 25 | MALEIC ACID ANHYDRIDE | 10 | 1.6 |
| C.EX. 3 | 1700 | 69 | 2 | 25 | MALEIC ACID ANHYDRIDE | 10 | 1.6 |
| C.EX. 4 | 1700 | 69 | 2 | 25 | MALEIC ACID ANHYDRIDE | 10 | 1 |
| C.EX. 5 | 500 | 69 | 2 | 25 | MALEIC ACID ANHYDRIDE | 10 | 0.5 |
| C.EX. 6 | 500 | 69 | 2 | 25 | MALEIC ACID ANHYDRIDE | 10 | 0.5 |
| C.EX. 7 | 500 | 69 | 2 | 25 | MALEIC ACID ANHYDRIDE | 10 | 0.5 |

Table 1-2

| | CROSSLINKABLE POLYVINYL ACETAL POROUS POWDER | | | | | | | |
|---|---|---|---|---|---|---|---|---|
| | INTRODUCTION AMOUNT OF CROSSLINKABLE GROUP (mol%) | (AMOUNT OF CARBOXYLATE GROUP) / (TOTAL AMOUNT OF CARBOXYL GROUP AND CARBOXYLATE GROUP) | AMOUNT OF RESIDUAL MONOMERS | PRIMARY PARTICLE SIZE (μm) | SECONDARY PARTICLE SIZE (μm) | BULK DENSITY (g/mL) | SOLVENT SOLUBILITY | AMOUNT OF WATER ABSORPTION (%) |
| EX. 1 | 7.1 | 0.06 | 0.8 | 3.6 | 134 | 0.21 | ◎ | 2.1 |
| EX. 2 | 3.5 | 0.18 | 1.0 | 1.3 | 67 | 0.19 | ◎ | 1.9 |

| EX. 3 | 5.2 | - | 1.2 | 3.9 | 101 | 0.22 | ◎ | 1.7 |
|---|---|---|---|---|---|---|---|---|
| EX. 4 | 6.0 | 0.07 | 1.3 | 0.9 | 52 | 0.17 | ◎ | 2.0 |
| EX. 5 | 7.1 | 0.06 | 0.9 | 3.7 | 562 | 0.45 | ○ | 2.1 |
| EX. 6 | 7.1 | 0.06 | 0.9 | 1.5 | 412 | 0.31 | ○ | 2.1 |
| EX. 7 | 6.5 | 0.03 | 0.8 | 1.2 | 75 | 0.21 | ◎ | 2.1 |
| EX. 8 | 7.1 | 0.04 | 1.2 | 2.6 | 123 | 0.19 | ◎ | 2.3 |
| EX. 9 | 6.7 | 0.08 | 1.0 | 1.3 | 67 | 0.20 | ◎ | 2.0 |
| EX. 10 | 7.9 | 0.20 | 1.7 | 1.1 | 58 | 0.18 | ◎ | 2.4 |
| EX. 11 | 5.0 | 0.02 | 2.1 | 1.0 | 78 | 0.22 | ◎ | 2.0 |
| EX. 12 | 2.4 | 0.02 | 1.3 | 1.0 | 82 | 0.21 | ◎ | 1.8 |
| EX. 13 | 0.9 | 0.02 | 1.4 | 1.1 | 65 | 0.20 | ◎ | 1.5 |
| EX. 14 | 6.5 | 0.02 | 0.8 | 1.3 | 150 | 0.34 | ◎ | 2.1 |
| EX. 15 | 6.5 | 0.02 | 0.9 | 1.4 | 251 | 0.29 | ◎ | 2.1 |
| EX. 16 | 6.5 | 0.02 | 0.8 | 1.0 | 347 | 0.31 | ○ | 2.1 |
| EX. 17 | 6.5 | 0.02 | 0.9 | 1.3 | 441 | 0.35 | ○ | 2.2 |
| EX. 18 | 1.8 | 0.02 | 0.9 | 1.5 | 67 | 0.23 | ◎ | 1.9 |
| EX. 19 | 2.1 | 0.17 | 3.1 | 1.4 | 55 | 0.21 | ◎ | 2.1 |
| EX. 20 | 5.2 | - | 1.2 | 1.1 | 124 | 0.22 | ◎ | 1.7 |
| EX. 21 | 4.3 | - | 2.1 | 1.3 | 54 | 0.20 | ◎ | 1.9 |
| EX. 22 | 4.2 | - | 3.3 | 1.0 | 71 | 0.19 | ◎ | 1.8 |
| EX. 23 | 3.7 | - | 6.4 | 1.3 | 85 | 0.20 | ◎ | 1.8 |
| EX. 24 | 7.0 | 0.40 | 0.9 | 1.2 | 59 | 0.20 | ◎ | 3.9 |
| EX. 25 | 5.8 | 0.69 | 1.8 | 1.3 | 63 | 0.21 | ◎ | 5.8 |
| C.EX. 1 | 0.2 | 0.95 | 1.1 | 3.5 | 105 | 0.21 | ○ | 6.0 |
| C.EX. 2 | 6.8 | - | 56.0 | *1 | *1 | *1 | *1 | 2.8 |
| C.EX. 3 | 6.5 | 0.14 | 0.7 | *1 | *1 | 0.08 | × | 2.0 |
| C.EX. 4 | 7.1 | 0.06 | 0.8 | *1 | 321 | 0.60 | × | 1.5 |
| C.EX. 5 | 6.0 | - | 67.0 | *1 | *1 | *1 | *1 | 1.8 |
| C.EX. 6 | 5.9 | 0.02 | 0.7 | *1 | *1 | 0.08 | Δ | 1.9 |
| C.EX. 7 | 6.5 | 0.03 | 0.8 | *1 | 323 | 0.67 | Δ | 1.8 |

* 1: MEASUREMENT IMPOSSIBLE

Table 2

| | UV CURED FILM | | THERMALLY CURED FILM 1 | | THERMALLY CURED FILM 2 | | | |
|---|---|---|---|---|---|---|---|---|
| | SWELLING DEGREE | RESIDUAL RATIO (%) | SWELLING DEGREE | RESIDUAL RATIO (%) | SWELLING DEGREE | RESIDUAL RATIO (%) | FILM YI | HAZE |
| EX. 1 | 2.7 | 87 | 2.7 | 86 | 1.1 | >99 | 9.5 | 2.2 |
| EX. 2 | 1.9 | 76 | 1.8 | 83 | 1.8 | 99 | 8.2 | 2.9 |
| EX. 3 | 1.7 | 92 | 1.5 | 94 | *2 | *2 | *2 | *2 |
| EX. 4 | 2.3 | 84 | 2.5 | 89 | 1.2 | >99 | 7.7 | 1.9 |
| EX. 5 | 2.6 | 81 | 3.0 | 84 | 1.1 | >99 | 9.0 | 2.0 |
| EX. 6 | 3.0 | 84 | 3.3 | 82 | 1.2 | >99 | 8.9 | 2.3 |
| EX. 7 | 3.5 | 85 | 3.4 | 90 | 1.2 | 99 | 7.8 | 2.9 |
| EX. 8 | 3.0 | 90 | 2.9 | 89 | 1.2 | >99 | 7.9 | 3.3 |
| EX. 9 | 3.4 | 89 | 2.9 | 88 | 1.7 | 98 | 7.8 | 3.0 |
| EX. 10 | 3.0 | 90 | 3.4 | 90 | 1.7 | 98 | 8.2 | 2.2 |
| EX. 11 | 4.6 | 88 | 5.0 | 87 | 1.2 | 99 | 6.0 | 2.7 |
| EX. 12 | 6.2 | 79 | 4.9 | 74 | 2.6 | >99 | 4.8 | 2.8 |
| EX. 13 | 8.2 | 56 | 9.0 | 45 | 5.1 | 99 | 5.0 | 3.0 |
| EX. 14 | *2 | *2 | *2 | *2 | *2 | *2 | *2 | *2 |
| EX. 15 | *2 | *2 | *2 | *2 | *2 | *2 | *2 | *2 |
| EX. 16 | *2 | *2 | *2 | *2 | *2 | *2 | **2 | *2 |
| EX. 17 | *2 | *2 | *2 | *2 | *2 | *2 | *2 | *2 |
| EX. 18 | *2 | *2 | *2 | *2 | 6.7 | 82 | 7.2 | 2.6 |
| EX. 19 | *2 | *2 | *2 | *2 | 8.0 | 85 | 6.7 | 2.8 |
| EX. 20 | 3.8 | 88 | 2.8 | 82 | *2 | *2 | *2 | *2 |
| EX. 21 | 3.8 | 87 | 3.5 | 85 | *2 | *2 | *2 | *2 |
| EX. 22 | 2.9 | 83 | 2.9 | 85 | *2 | *2 | *2 | *2 |
| EX. 23 | 4.5 | 89 | 3.7 | 80 | *2 | *2 | *2 | *2 |
| EX. 24 | *2 | *2 | *2 | *2 | 2.6 | 97 | 22.2 | 3.0 |

| | UV CURED FILM | | THERMALLY CURED FILM 1 | | THERMALLY CURED FILM 2 | | | |
|---|---|---|---|---|---|---|---|---|
| | SWELLING DEGREE | RESIDUAL RATIO (%) | SWELLING DEGREE | RESIDUAL RATIO (%) | SWELLING DEGREE | RESIDUAL RATIO (%) | FILM YI | HAZE |
| EX. 25 | *2 | *2 | *2 | *2 | 2.5 | 98 | 27.9 | 3.5 |
| C.EX. 1 | 34.5 | 45 | 31.8 | 53 | 10.0 | 45 | 6.8 | 23.9 |
| C.EX. 2 | 23.3 | 58 | 24.7 | 62 | 3.0 | 95 | 26.0 | 4.8 |
| C.EX. 3 | 2.6 | 84 | 2.7 | 82 | 1.5 | 98 | 7.9 | 2.2 |
| C.EX. 4 | 4.1 | 80 | 3.0 | 84 | 1.9 | 99 | 7.5 | 2.4 |
| C.EX. 5 | 23.2 | 55 | 27.2 | 57 | 3.6 | 94 | 25.7 | 3.6 |
| C.EX. 6 | 3.4 | 90 | 3.7 | 86 | 1.6 | 98 | 6.4 | 3.0 |
| C.EX. 7 | 2.9 | 87 | 3.0 | 85 | 1.7 | 97 | 6.8 | 2.6 |
| * 2: NOT MEASURED | | | | | | | | |

Crosslinkable polyvinyl butyral porous powder by the afore-mentioned method (B)

Example 30

(Preparation of polyvinyl butyral porous powder)

4050 g of ion-exchanged water and 330 g of polyvinyl alcohol modified and copolymerized with maleic acid anhydride (PVA-3: with a polymerization degree of 1000, a saponification degree of 98 mol%, and a content of maleic acid groups of 2 mol%) were put into a 5 L (liter) glass container equipped with a reflux condenser, a thermometer and an anchor-shaped stirrer blade (PVA concentration of 7.5%). Then, the content was heated to 95°C so that the PVA was dissolved completely. Subsequently, it was gradually cooled to 6°C taking about 30 minutes under stirring at 120 rpm, followed by addition of 195 g of butyl aldehyde and 270 mL of 20% hydrochloric acid, and acetalization reaction was carried out for 150 minutes. Thereafter, the temperature was raised to 50°C taking 60 minutes, and maintained at 50°C for 120 minutes. Then it was cooled to room temperature. After washing the precipitated resin with ion-exchanged water, an aqueous sodium hydroxide solution was added thereto, followed by washing again, and drying. Thus a polyvinyl butyral porous powder (PVB-8) was obtained. The obtained PVB-8 had a butyralization degree of 68 mol%, a content of the residual vinyl acetate of 2 mol%, and a content of maleic acid groups of 2 mol% (a content of carboxyl groups of 4 mol%). Further, the average particle size of the primary particles of the PVB-8 was 1.4 $\mu$m, the average particle size of the aggregated particles (secondary particles) thereof was 80 $\mu$m, and the bulk density thereof was 0.19 g/mL.

It should be noted that the butyralization degree, the content of the residual vinyl acetate units, the average particle size of the primary particles, the average particle size of the aggregated particles, and the bulk density of the polyvinyl butyral porous powder each were determined by the same method as in Example 1.

(Production of crosslinkable polyvinyl butyral porous powder)

900 g of hexane and 100 g of MEK were put into a 2 L separable flask. Then 200 g of the porous powder of the PVB-8 was added thereto under stirring, so as to be dispersed (a solid content concentration of 17%). In addition, 44 g of glycidyl methacrylate, 3.5 g of diazabicyclo[2,2,2]octane (catalyst), and 0.1 g of 4-methoxyphenol were added thereto and reaction was carried out at 60°C for 3 hours in a heterogeneous system. After the reaction, the resultant product was filtered, and the obtained powder was washed 5 times with 2 L of distilled water, followed by drying. Thus, a crosslinkable polyvinyl butyral porous powder 30 (with a water content of 1.0 %) was obtained.

The average particle size of the primary particles, the average particle size of the secondary particles, and the bulk density of the obtained crosslinkable polyvinyl butyral porous powder 30 were determined by the same method as in the polyvinyl butyral porous powder.

As to the crosslinkable polyvinyl butyral porous powder 30, the introduction amount of crosslinkable functional groups, and the amount of residual monomers were determined and the solvent solubility was evaluated using the same method as in Example 1.

Subsequently, a UV cured film and a thermally cured film 1 were produced using the crosslinkable polyvinyl butyral porous powder 30, in the same manner as in Example 1.

Table 3 and Table 4 indicate the measurement and evaluation results of the crosslinkable polyvinyl butyral porous powder 30 and the evaluation results of the cured films that were obtained from the same method as in Example 1. The remaining form of the cured film was evaluated by the following criteria. These results also are indicated in Tables.

(Evaluation of remaining form of cured film)

○: Form of cured film remains
×: Form of cured film does not remain

Example 31

A polyvinyl butyral porous powder (PVB-9) was obtained in the same manner as in Example 30, except that polyvinyl alcohol modified and copolymerized with itaconic acid (PVA-4: with a polymerization degree of 1000, a saponification degree of 98 mol%, and a content of itaconic acid groups of 2 mol%) was used instead of the polyvinyl alcohol modified and copolymerized with maleic acid anhydride (PVA-3) in Example 30. The PVB-9 had a butyralization degree of 72 mol%, a content of the residual vinyl acetate units of 2 mol%, and a content of itaconic acid groups of 2 mol% (a content of carboxyl groups of 4 mol%). Further, the average particle size of the primary particles of the PVB-9 was 1.7 $\mu$m, the average particle size of the aggregated particles (secondary particles) thereof was 89 $\mu$m, and the bulk density thereof was 0.19 g/mL.

Using the PVB-9, a crosslinkable polyvinyl butyral porous powder 31 (with a water content of 2.0%) was obtained in the same manner as in Example 30.

Subsequently, cured films were produced using the crosslinkable polyvinyl butyral porous powder 31, in the same manner as in Example 30.

Table 3 and Table 4 indicate the measurement and evaluation results of the crosslinkable polyvinyl butyral porous powder 31 and the evaluation results of the cured films that were obtained from the same method as in Example 30.

Example 32

A polyvinyl butyral porous powder (PVB-10) was obtained in the same manner as in Example 30, except that unmodified polyvinyl alcohol (PVA-5: with a polymerization degree of 1700 and a saponification degree of 99 mol%) was used instead of the polyvinyl alcohol modified and copolymerized with maleic acid anhydride (PVA-3) in Example 30, and the temperature at the time of cooling was changed to 10°C. The obtained PVB-10 had a butyralization degree of 70 mol%, and a content of the residual vinyl acetate of 1 mol%. Further, the average particle size of the primary particles of the PVB-10 was 4.0 $\mu$m, the average particle size of the aggregated particles (secondary particles) thereof was 136 $\mu$m, and the bulk density thereof was 0.21 g/mL.

300 g of hexane and 50 g of MEK were put into a 1 L separable flask. Then 80 g of the porous powder of the PVB-10 was added thereto under stirring, so as to be dispersed (a solid content concentration of 19%). 12 g of succinic acid anhydride, 2.0 g of triethyl amine, and 0.1 g of 4-methoxyphenol were added thereto and reaction was carried out at 25°C for 5 hours in a heterogeneous system. After the reaction, the resultant product was filtered, and washed 3 times with 1 L of distilled water, followed by drying. Thus, succinic acid anhydride modified polyvinyl butyral (PVB-11: with a modification rate of 6 mol%, and a water content of 1.2%) was obtained. The average particle size of the primary particles of the PVB-11 was 4.3 $\mu$m, the average particle size of the aggregated particles (secondary particles) thereof was 140 $\mu$m, and the bulk density thereof was 0.21 g/mL.

200 g of hexane and 40 g of MEK were put into a 1 L separable flask. Then 63 g of the porous powder of the PVB-11 was dispersed therein under stirring (a solid content concentration of 21%). 15.0 g of glycidyl methacrylate, 1.5 g of diazabicyclo[2,2,2]octane (catalyst), and 0.1 g of 4-methoxyphenol were added thereto and reaction was carried out at 60°C for 3.5 hours in a heterogeneous system. After the reaction, the resultant product was filtered, and the obtained powder was washed 5 times with 1 L of distilled water, followed by drying. Thus, a crosslinkable polyvinyl butyral porous powder 32 (with a water content of 1.0%) was obtained.

Subsequently, cured films were produced using the crosslinkable polyvinyl butyral porous powder 32, in the same manner as in Example 30.

Table 3 and Table 4 indicate the measurement and evaluation results of the crosslinkable polyvinyl butyral porous powder 32 and the evaluation results of the cured films that were obtained from the same method as in Example 30.

Example 33

A polyvinyl butyral porous powder (PVB-12) was obtained in the same manner as in Example 30, except that the temperature at the time of cooling was changed from 6°C to 1°C in Example 30. The PVB-12 had a butyralization degree of 69 mol%, a content of the residual vinyl acetate units of 2 mol%, and a content of maleic acid groups of 2 mol% (a content of carboxyl groups of 4 mol%). Further, the average particle size of the primary particles of the PVB-12 was 0.9 $\mu$m, the average particle size of the aggregated particles (secondary particles) thereof was 67 $\mu$m, and the bulk density thereof was 0.20 g/mL.

Using the PVB-12, a crosslinkable polyvinyl butyral porous powder 33 (with a water content of 1.2%) was obtained in the same manner as in Example 30.

Subsequently, cured films were produced using the crosslinkable polyvinyl butyral porous powder 33, in the same manner as in Example 30. Table 3 and Table 4 indicate the measurement and evaluation results of the crosslinkable polyvinyl butyral porous powder 33 and the evaluation results of the cured films that were obtained from the same method as in Example 30.

Example 34

5.0 g of the crosslinkable polyvinyl acetal porous powder 30 was pressed in a mold having a size of 10 cm $\times$ 10 cm $\times$ 1 mm under the pressure of 30 kg/cm$^2$ at 25°C for 10 minutes. Thus a crosslinkable polyvinyl butyral porous plate having a thickness of about 1 mm was obtained. Several copies were produced and crushed with a mixer. Thus a crosslinkable polyvinyl acetal porous powder 34 was obtained.

Subsequently, cured films were produced using the crosslinkable polyvinyl butyral porous powder 34, in the same manner as in Example 30.

Table 3 and Table 4 indicate the measurement and evaluation results of the crosslinkable polyvinyl butyral porous powder 34 and the evaluation results of the cured films that were obtained from the same method as in Example 30.

Example 35

5.0 g of the crosslinkable polyvinyl butyral porous powder 31 was pressed in a mold having a size of 10 cm $\times$ 10 cm $\times$ 1 mm under the pressure of 20 kg/cm$^2$ at 25°C for 10 minutes. Thus a crosslinkable polyvinyl acetal porous plate having a thickness of about 1 mm was obtained. Several copies were produced and crushed with a mixer. Thus a crosslinkable polyvinyl acetal porous powder 35 was obtained.

Subsequently, cured films were produced using the crosslinkable polyvinyl butyral porous powder 35, in the same manner as in Example 30.

Table 3 and Table 4 indicate the measurement and evaluation results of the crosslinkable polyvinyl butyral porous powder 35 and the evaluation results of the cured films that were obtained from the same method as in Example 30.

Comparative Example 10

500 g of MEK was put into a 1 L separable flask. Then 20 g of the polyvinyl butyral porous powder (PVB-8) obtained in Example 30 was added thereto under stirring, so as to be dissolved. In addition, 4.5 g of glycidyl methacrylate, 1.3 g of 1,4-diazabicyclo[2,2,2]octane (catalyst), and 0.1 g of 4-methoxyphenol were added thereto and reaction was carried out at 60°C for 3 hours in a homogeneous system. Thus an MEK solution containing crosslinkable polyvinyl butyral was obtained.

As to the obtained MEK solution containing crosslinkable polyvinyl butyral, the introduction amount of crosslinkable functional groups, and the amount of residual monomers were determined by the same method as in Comparative Example 2.

Subsequently, a UV cured film and a thermally cured film 1 were produced in the same manner as in Comparative Example 2, except that 41 g of the MEK solution containing crosslinkable polyvinyl butyral (a solid content concentration of 4.9%) was used.

Table 3 and Table 4 indicate the measurement and evaluation results of the crosslinkable polyvinyl butyral and the evaluation results of the cured films.

Comparative Example 11

286 g of the MEK solution containing crosslinkable polyvinyl butyral obtained in Comparative Example 10 was dropped into 2.5 L of hexane, followed by drying the resultant precipitate. Thus, a crosslinkable polyvinyl acetal precipitate was obtained.

Subsequently, cured films were produced using the crosslinkable polyvinyl butyral precipitate, in the same manner as in Example 30.

Table 3 and Table 4 indicate the measurement and evaluation results of the crosslinkable polyvinyl butyral precipitate and the evaluation results of the cured films that were obtained from the same method as in Example 30.

Comparative Example 12

The crosslinkable polyvinyl butyral porous powder 30 obtained in Example 30 was dissolved in ethanol to give a 5 % solution, and an appropriate amount of it was poured into a mold having a size of 10 cm $\times$ 10 cm, followed by drying at room temperature. Thus a film having a thickness of about 0.8 mm was obtained. Several copies of this were produced and cut. Thereafter, they were crushed with a mixer, so that crosslinkable polyvinyl butyral in pellet form was obtained.

Subsequently, cured films were produced using the crosslinkable polyvinyl butyral in pellet form, in the same manner as in Example 30. Table 3 and Table 4 indicate the measurement and evaluation results of the crosslinkable polyvinyl butyral in pellet form and the evaluation results of the cured films that were obtained from the same method as in Example 30.

Table 3

| | POLYVINYL ACETAL POROUS POWDER | | | | CROSSLINKABLE POLYVINYL ACETAL POROUS POWDER | | | | | | |
|---|---|---|---|---|---|---|---|---|---|---|---|
| | POLYMERIZATION DEGREE | ACETALIZATION DEGREE (mol%) | VINYL ACETATE GROUP (mol%) | AMOUNT OF CARBOXYL GROUP (mol%) | INTRODUCTION AMOUNT OF CROSSLINKABLE GROUP (mol%) | AMOUNT OF RESIDUAL MONOMERS | PRIMARY PARTICLE SIZE (μm) | SECONDARY PARTICLE SIZE (μm) | BULK DENSITY (g/mL) | SOLVENT SOLUBILITY |
| EX. 30 | 1000 | 68 | 2 | 4 | 4.6 | 0.7 | 1.6 | 76 | 0.19 | ◎ |
| EX. 31 | 1000 | 72 | 2 | 4 | 4.3 | 0.9 | 1.9 | 80 | 0.19 | ◎ |
| EX. 32 | 1700 | 70 | 1 | 6 | 5.5 | 1.5 | 4.3 | 132 | 0.20 | ◎ |
| EX. 33 | 1000 | 69 | 2 | 4 | 3.9 | 1.2 | 0.9 | 62 | 0.18 | ◎ |
| EX. 34 | 1000 | 68 | 2 | 4 | 4.6 | 0.8 | 1.6 | 696 | 0.39 | ○ |
| EX. 35 | 1000 | 72 | 2 | 4 | 4.3 | 0.9 | 1.7 | 610 | 0.30 | ○ |
| C.EX. 10 | 1000 | 68 | 2 | 4 | 4.1 | 65.7 | *1 | *2 | *3 | *3 |
| C.EX. 11 | 1000 | 68 | 2 | 4 | 4.2 | 1.6 | *1 | *2 | 0.11 | × |
| C.EX. 12 | 1000 | 68 | 2 | 4 | 4.6 | 2.0 | *1 | 451 | 0.58 | × |

* 1: MEASUREMENT IMPOSSIBLE BECAUSE OF NO PRIMARY PARTICLES

* 2: MEASUREMENT IMPOSSIBLE

* 3: NOT MEASURED

Table 4

| | UV CURED FILM | | | THERMALLY CURED FILM | | |
|---|---|---|---|---|---|---|
| | SOLVENT RESISTANCE/ RESIDUAL RATIO (%) | SOLVENT RESISTANCE/ SWELLING DEGREE (%) | FILM FORM | SOLVENT RESISTANCE/ RESIDUAL RATIO (%) | SOLVENT RESISTANCE/ SWELLING DEGREE (%) | FILM FORM |
| EX. 30 | 87 | 2.7 | ○ | 83 | 3.4 | ○ |
| EX. 31 | 89 | 3.9 | ○ | 83 | 4.2 | ○ |
| EX. 32 | 92 | 1.9 | ○ | 92 | 2.1 | ○ |
| EX. 33 | 91 | 3.7 | ○ | 87 | 3.1 | ○ |
| EX. 34 | 93 | 3.5 | ○ | 83 | 2.0 | ○ |
| EX. 35 | 88 | 2.2 | ○ | 91 | 2.4 | ○ |
| C.EX. 10 | 39 | 43.7 | × | 55 | 32.0 | × |
| C.EX. 11 | 83 | 4 | ○ | 87 | 3.3 | ○ |
| C.EX. 12 | 85 | 2.3 | ○ | 85 | 2.3 | ○ |

Example 36 (Crosslinkable ceramic binder)

(Preparation of thermally-crosslinkable ceramic composition and production of thermally-crosslinkable ceramic green sheet)

25 g of barium titanate having a particle size of 0.1 $\mu$m (BT-01, manufactured by Sakai Chemical Industry Co., Ltd.), 15 g of ethanol, 15 g of toluene, 1 g of the crosslinkable polyvinyl butyral porous powder 32, 0.5 g of MALIALIM AKM (manufactured by NOF CORPORATION) as a dispersant, 1 g of benzyl butyl phthalate as a plasticizer, and 0.01 g of $\alpha,\alpha$-azobisisobutyronitrile as a thermal crosslinking initiator were put into a ball mill, and mixed at 20°C and 100 rpm for 20 hours. Subsequently, the obtained thermally-crosslinkable ceramic composition 3 was applied onto PET so that the thickness after drying should be 25 $\mu$m, followed by drying at 30°C for 5 hours. Thus, a thermally-crosslinkable ceramic green sheet 3 was obtained. This was subjected to thermal treatment at 90°C for 1 hour, and thus a thermally-crosslinked ceramic green sheet 3 was obtained.

(Evaluation of strength of thermally-crosslinked ceramic green sheet)

The obtained thermally-crosslinked ceramic green sheet 3 was cut into a size of 8 cm × 1 cm, and a tensile test was carried out on it at the speed of 8 mm/minute and the angle of 180° using an autograph, AG-IS, manufactured by SHIMADZU CORPORATION, until fracture occurred. The stress at the fracture was 4.6 N/mm$^2$, and the elongation of the thermally-crosslinked ceramic green sheet 3 at the fracture was 17%.

Example 37 (Crosslinkable ceramic binder)

(Preparation of photo-crosslinkable ceramic composition and production of photo-crosslinkable ceramic green sheet)

25 g of barium titanate having a particle size of 0.1 $\mu$m (BT-01, manufactured by Sakai Chemical Industry Co., Ltd.), 15 g of ethanol, 15 g of toluene, 1 g of the crosslinkable polyvinyl acetal porous powder 32, 0.5 g of MALIALIM AKM (manufactured by NOF CORPORATION) as a dispersant, 1 g of benzyl butyl phthalate as a plasticizer, and 0.02 g of 2-hydroxy-4'-(2-hydroxyethoxy)-2-methylpropiophenone as a photocrosslinking initiator were put into a ball mill, and mixed at 100 rpm for 20 hours. Subsequently, the obtained photo-crosslinkable ceramic composition 2 was applied onto PET so that the thickness after drying should be 25 $\mu$m, followed by drying at 40°C for 3 hours and at 70°C for 5 hours. Thus, a photo-crosslinkable ceramic green sheet 2 was obtained. This was irradiated with UV light using an ultraviolet irradiator, TOSCURE 1000 manufactured by TOSHIBA CORPORATION (at 2 meters/minute, 10 times). Thus a photo-crosslinked ceramic green sheet 2 was obtained.

(Evaluation of strength of photo-crosslinked ceramic green sheet)

The obtained photo-crosslinked ceramic green sheet 2 was cut into a size of 8 cm $\times$ 1 cm, and a tensile test was carried out on it at the speed of 8 mm/minute and the angle of 180° using an autograph, AG-IS, manufactured by SHIMADZU CORPORATION, until fracture occurred. The stress at the fracture was 4.8 N/mm$^2$, and the elongation of the photo-crosslinked ceramic green sheet 2 at the fracture was 19%.

Comparative Example 13

(Preparation of ceramic slurry and ceramic green sheet)

25 g of barium titanate having a particle size of 0.1 $\mu$m (BT-01, manufactured by Sakai Chemical Industry Co., Ltd.), 15 g of ethanol, 15 g of toluene, 1 g of the PVB-10, 0.5 g of MALIALIM AKM (manufactured by NOF CORPORATION) as a dispersant, and 1 g of benzyl butyl phthalate as a plasticizer were put into a ball mill, and mixed at 100 rpm for 20 hours. Subsequently, the obtained ceramic slurry was applied onto PET so that the thickness after drying should be 25 $\mu$m, followed by drying at 40°C for 3 hours and at 70°C for 5 hours. Thus, a ceramic green sheet 2 was obtained.

(Evaluation of strength of ceramic green sheet)

The obtained ceramic green sheet 2 was cut into a size of 8 cm $\times$ 1 cm, and a tensile test was carried out on it at the speed of 8 mm/minute and the angle of 180° using an autograph, AG-IS, manufactured by SHIMADZU CORPORATION, until fracture occurred. The stress at the fracture was 3.1 N/mm$^2$, and the elongation of the ceramic green sheet 2 at the fracture was 10%.

Crosslinkable polyvinyl butyral porous powder by the afore-mentioned method (C) and (D)

Example 38 (Preparation of polyvinyl butyral porous powder)

3375 g of ion-exchanged water and 275 g of polyvinyl alcohol (PVA-1: with a polymerization degree of 1700 and a saponification degree of 98 mol%) were put into a 5 L (liter) glass container equipped with a reflux condenser, a thermometer and an anchor-shaped stirrer blade (PVA concentration of 7.5%). Then, the content was heated to 95°C so that the PVA was dissolved completely. Subsequently, it was gradually cooled to 10°C taking about 30 minutes under stirring at 120 rpm, followed by addition of 160 g of butyl aldehyde and 225 mL of 20% hydrochloric acid, and acetalization reaction was carried out for 150 minutes. Thereafter, the temperature was raised to 50°C taking 60 minutes, and maintained at 50°C for 120 minutes. Then it was cooled to room temperature. After washing the precipitated resin with ion-exchanged water, an aqueous sodium hydroxide solution was added thereto, followed by washing again, and drying. Thus polyvinyl butyral (PVB-13) was obtained. The obtained PVB-13 had an acetalization degree of 69 mol%, and a content of the residual vinyl acetate units of 2 mol%. Further, the average particle size of the primary particles of the PVB-13 was 4.3 $\mu$m, the average particle size of the aggregated particles (secondary particles) thereof was 105 $\mu$m, and the bulk density thereof was 0.21 g/mL. It should be noted that the butyralization degree, the content of the residual vinyl acetate units, the average particle size of the primary particles, the average particle size of the aggregated particles, and the bulk density of the polyvinyl butyral porous powder each were determined by the same method as in Example 1.

(Production of crosslinkable polyvinyl acetal porous powder)

900 g of hexane and 100 g of MEK were put into a 2 L separable flask. Then 200 g of the porous powder of the PVB-13 was added thereto under stirring, so as to be dispersed (a solid content concentration of 17%). In addition, 44.2 g of glycidyl methacrylate, 7 g of 1,4-diazabicyclo[2,2,2]octane (catalyst), and 0.1 g of 4-methoxyphenol were added thereto and reaction was carried out at 70°C for 6 hours in a heterogeneous system. After the reaction, the resultant product was filtered, and the obtained powder was washed 5 times with 2 L of distilled water, followed by drying. Thus, a crosslinkable polyvinyl acetal porous powder 38 (with a water content of 1.8%) was obtained.
The average particle size of the primary particles, the average particle size of the secondary particles, and the bulk density of the obtained crosslinkable polyvinyl butyral porous powder 38 were determined by the same method as in the polyvinyl butyral porous powder.

As to the crosslinkable polyvinyl butyral porous powder 38, the introduction amount of crosslinkable functional groups, and the amount of residual monomers were determined and the solvent solubility was evaluated by the same method as in Example 1.

Subsequently, a UV cured film and a thermally cured film 1 were produced using the crosslinkable polyvinyl butyral porous powder 38, in the same manner as in Example 1.

Table 5 and Table 6 indicate the measurement and evaluation results of the crosslinkable polyvinyl butyral porous powder 38 and the evaluation results of the cured films that were obtained from the same method as in Example 1. The remaining form of the cured film was evaluated by the following criteria. These results also are indicated in Tables.

(Evaluation of remaining form of cured film)

o: Form of cured film remains

×: Form of cured film does not remain

Example 39

A polyvinyl butyral porous product (PVB-14) was obtained in the same manner as in Example 38, except that polyvinyl alcohol (PVA-6: with a polymerization degree of 1000 and a saponification degree of 98 mol%) was used instead of the polyvinyl alcohol (PVA-1) in Example 38. The obtained PVB-14 had an acetalization degree of 69 mol%, and a content of the residual vinyl acetate units of 2 mol%. Further, the average particle size of the primary particles of the PVB-14 was 4.0 $\mu$m, the average particle size of the aggregated particles (secondary particles) thereof was 119 $\mu$m, and the bulk density thereof was 0.21 g/mL.

Using the PVB-14, a crosslinkable polyvinyl acetal porous powder 39 (with a water content of 1.5%) was obtained in the same manner as in Example 38.

Subsequently, cured films were produced using the crosslinkable polyvinyl butyral porous powder 39, in the same manner as in Example 38.

Table 5 and Table 6 indicate the measurement and evaluation results of the crosslinkable polyvinyl butyral porous powder 39 and the evaluation results of the cured films that were obtained from the same method as in Example 38.

Example 40

450 g of hexane and 50 g of MEK were put into a 1 L separable flask. Then 100 g of the powder of the PVB-13 was added thereto under stirring, so as to be dispersed (a solid content concentration of 17%). 24.1 g of 2-isocyanoethyl methacrylate, 0.5 g of triethyl amine (catalyst), and 0.1 g of 4-methoxyphenol were added thereto and reaction was carried out at 70°C for 4 hours in a heterogeneous system. After the reaction, the resultant product was filtered, and the obtained powder was treated with 1 L of a 0.1 mol/L aqueous hydrochloric acid solution at 50°C for 1 hour, and then filtered. Thus the amine catalyst was neutralized and removed. Subsequently, it was washed 5 times with 1 L of distilled water, followed by drying. Thus a crosslinkable polyvinyl acetal porous powder 40 (with a water content of 1.4%) was obtained.

Subsequently, cured films were produced using the crosslinkable polyvinyl butyral porous powder 40, in the same manner as in Example 38.

Table 5 and Table 6 indicate the measurement and evaluation results of the crosslinkable polyvinyl butyral porous powder 40 and the evaluation results of the cured films that were obtained from the same method as in Example 38.

Example 41

A polyvinyl butyral porous powder (PVB-15) was obtained in the same manner as in Example 38, except that the temperature at the time of cooling was changed from 10°C to 3°C in Example 38. The obtained PVB-15 had an acetalization degree of 68 mol%, and a content of the residual vinyl acetate units of 2 mol%. Further, the average particle size of the primary particles of the PVB-15 was 1.4 $\mu$m, the average particle size of the aggregated particles (secondary particles) thereof was 60 $\mu$m, and the bulk density thereof was 0.16 g/mL.

Using the PVB-15, a crosslinkable polyvinyl acetal porous powder 41 (with a water content of 1.4%) was obtained in the same manner as in Example 38.

Subsequently, cured films were produced using the crosslinkable polyvinyl butyral porous powder 41, in the same manner as in Example 38.

Table 5 and Table 6 indicate the measurement and evaluation results of the crosslinkable polyvinyl butyral porous powder 41 and the evaluation results of the cured films that were obtained from the same method as in Example 38.

Example 42

6.0 g of the crosslinkable polyvinyl acetal porous powder 38 obtained in Example 38 was pressed in a mold having a size of 10 cm × 10 cm × 1 mm under the pressure of 25 kg/cm$^2$ at 25°C for 15 minutes. Thus a crosslinkable polyvinyl acetal porous plate having a thickness of about 1 mm was obtained. Several copies were produced and crushed with a mixer. Thus a crosslinkable polyvinyl butyral porous powder 42 was obtained.

Subsequently, cured films were produced using the crosslinkable polyvinyl butyral porous powder 42, in the same manner as in Example 38.

Table 5 and Table 6 indicate the measurement and evaluation results of the crosslinkable polyvinyl butyral porous powder 42 and the evaluation results of the cured films that were obtained from the same method as in Example 38.

Example 43

4.8 g of the crosslinkable polyvinyl acetal porous powder 41 obtained in Example 41 was pressed in a mold having a size of 10 cm × 10 cm × 1 mm under the pressure of 30 kg/cm$^2$ at 25°C for 10 minutes. Thus a crosslinkable polyvinyl butyral porous plate having a thickness of about 1 mm was obtained. Several copies were produced and crushed with a mixer. Thus a crosslinkable polyvinyl butyral porous powder 43 was obtained.

Subsequently, cured films were produced using the crosslinkable polyvinyl butyral porous powder 43, in the same manner as in Example 38.

Table 5 and Table 6 indicate the measurement and evaluation results of the crosslinkable polyvinyl butyral porous powder 43 and the evaluation results of the cured films that were obtained from the same method as in Example 38.

Comparative Example 14

500 g of MEK was put into a 1 L separable flask. Then 20 g of the polyvinyl butyral porous powder (PVB-13) obtained in Example 38 was added thereto under stirring, so as to be dissolved. In addition, 4.5 g of glycidyl methacrylate, 0.6 g of 1,4-diazabicyclo[2,2,2]octane (catalyst), and 0.1 g of 4-methoxyphenol were added thereto and reaction was carried out at 70°C for 6 hours in a homogeneous system. Thus an MEK solution containing crosslinkable polyvinyl butyral.

As to the obtained MEK solution containing crosslinkable polyvinyl butyral, the introduction amount of crosslinkable functional groups, and the amount of residual monomers were determined by the same method as in Comparative Example 2.

Subsequently, a UV cured film and a thermally cured film 1 were produced in the same manner as in Comparative Example 2, except that 50 g of the MEK solution containing crosslinkable polyvinyl butyral (a solid content concentration of 4.1%) was used.

Table 5 and Table 6 indicate the measurement and evaluation results of the crosslinkable polyvinyl butyral and the evaluation results of the cured films.

Comparative Example 15

500 g of MEK was put into a 1 L separable flask. Then 20 g of the polyvinyl butyral porous powder (PVB-13) obtained in Example 38 was added thereto under stirring, so as to be dissolved. In addition, 4.4 g of glycidyl methacrylate, 0.6 g of 1,4-diazabicyclo[2,2,2]octane (catalyst), and 0.1 g of 4-methoxyphenol were added thereto and reaction was carried out at 70°C for 6 hours in a homogeneous system. After the reaction, the obtained solution was dropped into 3 L of hexane, followed by drying the resultant precipitate. Thus, a crosslinkable polyvinyl butyral precipitate was obtained.

Subsequently, cured films were produced using the crosslinkable polyvinyl butyral precipitate, in the same manner as in Example 38.

Table 5 and Table 6 indicate the measurement and evaluation results of the crosslinkable polyvinyl butyral precipitate and the evaluation results of the cured films that were obtained from the same method as in Example 38.

Comparative Example 16

The crosslinkable polyvinyl acetal porous powder 38 obtained in Example 38 was dissolved in ethanol to give a 5 % solution, and an appropriate amount of it was poured into a mold having a size of 10 cm × 10 cm, followed by drying at room temperature. Thus a film having a thickness of about 0.8 mm was obtained. Several copies of this were produced and cut. Thereafter, they were crushed with a mixer, so that crosslinkable polyvinyl acetal in pellet form was obtained.

Subsequently, cured films were produced using the crosslinkable polyvinyl butyral in pellet form, in the same manner as in Example 38.

Table 5 and Table 6 indicate the measurement and evaluation results of the crosslinkable polyvinyl butyral in pellet form and the evaluation results of the cured films that were obtained from the same method as in Example 38.

## Table 5

| | POLYVINYL ACETAL POROUS POWDER | | | CROSSLINKABLE POLYVINYL ACETAL POROUS POWDER | | | | | | | |
|---|---|---|---|---|---|---|---|---|---|---|
| | POLYMERIZATION DEGREE | ACETALIZATION DEGREE (mol%) | VINYL ACETATE GROUP (mol%) | COMPOUND FOR MODIFICATION | INTRODUCTION AMOUNT OF CROSSLINKABLE GROUP (mol%) | AMOUNT OF RESIDUAL MONOMERS | PRIMARY PARTICLE SIZE (μm) | SECONDARY PARTICLE SIZE (μm) | BULK DENSITY (g/mL) | SOLVENT SOLUBILITY |
| EX. 38 | 1700 | 69 | 2 | GMA | 3.4 | 0.8 | 4.2 | 122 | 0.21 | ◎ |
| EX. 39 | 1000 | 69 | 2 | GMA | 6.1 | 1.0 | 4.7 | 132 | 0.21 | ◎ |
| EX. 40 | 1700 | 69 | 2 | IEM | 6.1 | 0.8 | 4.3 | 119 | 0.20 | ◎ |
| EX. 41 | 1700 | 68 | 2 | GMA | 4.5 | 0.5 | 1.5 | 56 | 0.16 | ◎ |
| EX. 42 | 1700 | 69 | 2 | GMA | 4.5 | 0.8 | 4 | 465 | 0.43 | o |
| EX. 43 | 1700 | 68 | 2 | GMA | 4.0 | 0.5 | 1.7 | 638 | 0.29 | o |
| C.EX. 14 | 1700 | 69 | 2 | GMA | 19.3 | 41.5 | *1 | *2 | *3 | *3 |
| C.EX. 15 | 1700 | 69 | 2 | GMA | 4.3 | 0.7 | *1 | *2 | 0.09 | × |
| C.EX. 16 | 1700 | 69 | 2 | GMA | 3.0 | 2.3 | *1 | 430 | 0.65 | × |

GMA: GLYCIDYL METHACRYLATE

IEM: 2-ISOCYANOETHYL METHACRYLATE

* 1: MEASUREMENT IMPOSSIBLE BECAUSE OF NO PRIMARY PARTICLES

* 2: MEASUREMENT IMPOSSIBLE

* 3: NOT MEASURED

Table 6

| | UV CURED FILM | | | THERMALLY CURED FILM | | |
|---|---|---|---|---|---|---|
| | SOLVENT RESISTANCE/ RESIDUAL RATIO (%) | SOLVENT RESISTANCE/ SWELLING DEGREE (%) | FILM FORM | SOLVENT RESISTANCE/ RESIDUAL RATIO (%) | SOLVENT RESISTANCE/ SWELLING DEGREE (%) | FILM FORM |
| EX. 38 | 86 | 2.7 | ○ | 83 | 3.4 | ○ |
| EX. 39 | 91 | 3.9 | ○ | 93 | 6.1 | ○ |
| EX. 40 | 88 | 3.3 | ○ | 91 | 6.1 | ○ |
| EX. 41 | 83 | 3 | ○ | 89 | 4.5 | ○ |
| EX. 42 | 83 | 2.9 | ○ | 82 | 4.5 | ○ |
| EX. 43 | 89 | 4 | ○ | 85 | 4.0 | ○ |
| C.EX. 14 | 45 | 14.3 | × | 55 | 19.3 | × |
| C.EX. 15 | 84 | 4.5 | ○ | 87 | 4.3 | ○ |
| C.EX. 16 | 85 | 2.9 | ○ | 83 | 3.0 | ○ |

Example 44 (Crosslinkable ceramic binder)

(Preparation of ceramic slurry and production of thermally-crosslinked ceramic green sheet)

25 g of barium titanate having a particle size of 0.1 $\mu$m (BT-01, manufactured by Sakai Chemical Industry Co., Ltd.), 15 g of ethanol, 15 g of toluene, 1 g of the crosslinkable polyvinyl butyral porous powder 40, 0.5 g of MALIALIM AKM (manufactured by NOF CORPORATION) as a dispersant, 1 g of benzyl butyl phthalate as a plasticizer, and 0.01 g of $\alpha,\alpha$-azobisisobutyronitrile as a thermal crosslinking initiator were put into a ball mill, and mixed at 20°C and 100 rpm for 20 hours. Subsequently, the obtained thermally-crosslinkable ceramic slurry was applied onto PET so that the thickness after drying should be 25 $\mu$m, followed by drying at 30°C for 5 hours and thermal treatment at 90°C for 1 hour. Thus, a thermally-crosslinked ceramic green sheet 4 was obtained.

(Evaluation of strength of thermally-crosslinked ceramic green sheet)

The obtained thermally-crosslinked ceramic green sheet 4 was cut into a size of 8 cm × 1 cm, and a tensile test was carried out on it at the speed of 8 mm/minute and the angle of 180° using an autograph, AG-IS, manufactured by SHIMADZU CORPORATION, until fracture occurred. The stress at the fracture was 4.6 N/mm$^2$, and the elongation of the thermally-crosslinked ceramic green sheet 4 at the fracture was 17%.

Example 45 (Crosslinkable ceramic binder)

(Preparation of ceramic slurry and production of photo-crosslinked ceramic green sheet)

25 g of barium titanate having a particle size of 0.1 $\mu$m (BT-01, manufactured by Sakai Chemical Industry Co., Ltd.), 15 g of ethanol, 15 g of toluene, 1 g of the crosslinkable polyvinyl butyral porous powder 40, 0.5 g of MALIALIM AKM (manufactured by NOF CORPORATION) as a dispersant, 1 g of benzyl butyl phthalate as a plasticizer, and 0.02 g of 2-hydroxy-4'-(2-hydroxyethoxy)-2-methylpropiophenone as a photocrosslinking initiator were put into a ball mill, and mixed at 100 rpm for 20 hours. Subsequently, the obtained photo-crosslinkable ceramic slurry was applied onto PET so that the thickness after drying should be 25 $\mu$m, followed by drying at 40°C for 3 hours and at 70°C for 5 hours. This was irradiated with UV light using an ultraviolet irradiator, TOSCURE 1000 manufactured by TOSHIBA CORPORATION (at 2 meters/minute, 10 times). Thus, a photo-crosslinked ceramic green sheet 3 was obtained.

(Evaluation of strength of photo-crosslinked ceramic green sheet)

The obtained photo-crosslinked ceramic green sheet 3 was cut into a size of 8 cm $\times$ 1 cm, and a tensile test was carried out on it at the speed of 8 mm/minute and the angle of using an autograph, AG-IS, manufactured by SHIMADZU CORPORATION, until fracture occurred. The stress at the fracture was 4.8 N/mm$^2$, and the elongation of the photo-crosslinked green sheet 3 at the fracture was 19%.

Comparative Example 17

(Preparation of ceramic slurry and production of ceramic green sheet)

25 g of barium titanate having a particle size of 0.1 $\mu$m (BT-01, manufactured by Sakai Chemical Industry Co., Ltd.), 15 g of ethanol, 15 g of toluene, 1 g of the PVB-15, 0.5 g of MALIALIM AKM (manufactured by NOF CORPORATION) as a dispersant, and 1 g of benzyl butyl phthalate as a plasticizer were put into a ball mill, and mixed at 100 rpm for 20 hours. Subsequently, the obtained ceramic slurry was applied onto PET so that the thickness after drying should be 25 $\mu$m, followed by drying at 40°C for 3 hours and at 70°C for 5 hours. Thus, a ceramic green sheet 3 was obtained.

(Evaluation of strength of ceramic green sheet)

The obtained ceramic green sheet 3 was cut into a size of 8 cm $\times$ 1 cm, and a tensile test was carried out on it at the speed of 8 mm/minute and the angle of 180° using an autograph, AG-IS, manufactured by SHIMADZU CORPORATION, until fracture occurred. The stress at the fracture was 3.1 N/mm$^2$, and the elongation of the ceramic green sheet 3 at the fracture was 10%.

INDUSTRIAL APPLICABILITY

The crosslinkable polyvinyl acetal porous powder of the present invention can form a cured product having excellent solvent resistance by being subjected to UV irradiation, electron beam irradiation, thermal treatment or the like. It is therefore useful for various applications in which solvent resistance is required, such as ceramic binders, photosensitive material binders, adhesives, powder coatings, and interlayer films for automotive or building glass. Among these, it is useful particularly as a crosslinkable powder coating and a crosslinkable ceramic binder.

**Claims**

1. A crosslinkable polyvinyl acetal porous powder, comprising crosslinkable polyvinyl acetal containing a monomer unit having a crosslinkable functional group bonded thereto through at least one bond selected from the group consisting of an ester bond, an ether bond and an urethane bond, and having a content of the crosslinkable functional group of 0.3 to 20 mol% with respect to the total of -CH$_2$-CH-units in the main chain of polyvinyl acetal, wherein the crosslinkable polyvinyl acetal porous powder is formed of aggregated particles (secondary particles) in which primary particles agglomerate, and
the crosslinkable polyvinyl acetal porous powder has an average particle size of the secondary particles of 30 to 10000 $\mu$m determined by a measurement using a laser diffraction method and a bulk density of 0.12 to 0.50 g/mL determined based on JIS K6721.

2. The crosslinkable polyvinyl acetal porous powder according to claim 1, wherein
the crosslinkable functional group is at least one functional group selected from the group consisting of a functional group including an ethylenically unsaturated bond, a functional group including a carboxyl group, and a functional group including a carboxylate group.

3. The crosslinkable polyvinyl acetal porous powder according to claim 2, wherein
the functional group including an ethylenically unsaturated bond is a vinyl group, a methylvinyl group, a styryl group, a carboxyvinyl group, a (meth)acryloyloxy C$_{1-6}$ alkyl group, or a (meth)acryloyloxyhydroxy C$_{1-6}$ alkyl group.

4. The crosslinkable polyvinyl acetal porous powder according to claim 1, wherein

the monomer unit having a crosslinkable functional group bonded thereto through an ester bond has a chemical structure in which a hydroxyl group in a vinyl alcohol unit and a carboxylic acid compound having a crosslinkable functional group are esterified.

5. The crosslinkable polyvinyl acetal porous powder according to claim 4, wherein
the carboxylic acid compound having a crosslinkable functional group is (meth)acrylic acid and/or cinnamic acid.

6. The crosslinkable polyvinyl acetal porous powder according to claim 4, wherein
the carboxylic acid compound having a crosslinkable functional group is at least one selected from the group consisting of maleic acid, itaconic acid, succinic acid, 1,2-cyclohexane dicarboxylic acid, glutaric acid, phthalic acid, and trimellitic acid.

7. The crosslinkable polyvinyl acetal porous powder according to claim 1, wherein
the monomer unit having a crosslinkable functional group bonded thereto through an ester bond has a chemical structure in which a monomer unit having a carboxyl group and an epoxy compound having a crosslinkable functional group are esterified.

8. The crosslinkable polyvinyl acetal porous powder according to claim 1, wherein
the monomer unit having a crosslinkable functional group bonded thereto through an ether bond has a chemical structure in which a hydroxyl group in a vinyl alcohol unit and an epoxy compound having a crosslinkable functional group are reacted to form an ether bond.

9. The crosslinkable polyvinyl acetal porous powder according to claim 1, wherein
the monomer unit having a crosslinkable functional group bonded thereto through an urethane bond has a chemical structure in which a hydroxyl group in a vinyl alcohol unit and an isocyanate compound having a crosslinkable functional group are reacted to form an urethane bond.

10. The crosslinkable polyvinyl acetal porous powder according to claim 1, wherein
the primary particles have an average particle size of 10 $\mu$m or less.

11. The crosslinkable polyvinyl acetal porous powder according to claim 1, wherein
the crosslinkable polyvinyl acetal contains a carboxyl group and/or a carboxylate group with a ratio given by Formula (1):

$$0 \le [\text{Amount of carboxylate groups/(Total amount of carboxyl groups and carboxylate groups)}] \le 0.3...(1).$$

12. A method for producing a crosslinkable polyvinyl acetal porous powder, comprising the step of: reacting a polyvinyl acetal porous powder that may have a carboxyl group and/or a carboxylate group with a compound having a crosslinkable functional group, wherein
the reaction is carried out in the state where the polyvinyl acetal porous powder is dispersed in a solvent in which the compound having a crosslinkable functional group is soluble, but the polyvinyl acetal porous powder and the crosslinkable polyvinyl acetal porous powder are insoluble, and
an acetalization degree of the polyvinyl acetal porous powder is 40 to 85 mol%.

13. The method for producing the crosslinkable polyvinyl acetal porous powder according to claim 12, wherein
the polyvinyl acetal porous powder has an average secondary particle size of 30 to 10000 $\mu$m determined by a measurement using a laser diffraction method and a bulk density of 0.12 to 0.50 g/mL, determined based on JIS K6721.

14. The method for producing the crosslinkable polyvinyl acetal porous powder according to claim 12, wherein
in the reaction, the residual hydroxyl group of the polyvinyl acetal porous powder that may have a carboxyl group and/or carboxylate group is reacted with a carboxylic acid compound having a crosslinkable functional group or a derivative thereof.

15. The method for producing the crosslinkable polyvinyl acetal porous powder according to claim 14, wherein
the carboxylic acid compound having a crosslinkable functional group or the derivative is at least one selected from the group consisting of (meth)acrylic acid chloride, (meth)acrylic acid anhydride, cinnamic acid chloride, cinnamic acid anhydride, maleic acid anhydride, itaconic acid anhydride, succinic acid anhydride, (1,2-cyclohexane dicarboxylic acid)anhydride, glutaric acid anhydride, phthalic acid anhydride, and trimellitic acid anhydride.

16. The method for producing the crosslinkable polyvinyl acetal porous powder according to claim 14, wherein the reaction temperature is -10 to 60°C.

17. The method for producing the crosslinkable polyvinyl acetal porous powder according to claim 12, wherein in the reaction, the carboxyl group and/or the carboxylate group in the polyvinyl acetal porous powder having the carboxyl group and/or the carboxylate group is reacted with an epoxy compound having a crosslinkable functional group.

18. The method for producing the crosslinkable polyvinyl acetal porous powder according to claim 12, wherein in the reaction, the residual hydroxyl group of the polyvinyl acetal porous powder that may have a carboxyl group and/or carboxylate group is reacted with an epoxy compound having a crosslinkable functional group.

19. The method for producing the crosslinkable polyvinyl acetal porous powder according to claim 12, wherein in the reaction, the residual hydroxyl group of the polyvinyl acetal porous powder that may have a carboxyl group and/or a carboxylate group is reacted with an isocyanate compound having a crosslinkable functional group.

20. A crosslinkable ceramic binder comprising the crosslinkable polyvinyl acetal porous powder according to claim 1.

21. A thermally-crosslinkable ceramic composition comprising the crosslinkable polyvinyl acetal porous powder according to claim 1.

22. A photo-crosslinkable ceramic composition comprising the crosslinkable polyvinyl acetal porous powder according to claim 1.

23. A thermally-crosslinkable ceramic green sheet obtained from the thermally-crosslinkable ceramic composition according to claim 21.

24. A photo-crosslinkable ceramic green sheet obtained from the photo-crosslinkable ceramic composition according to claim 22.

25. A thermally-crosslinked ceramic green sheet obtained by thermal treatment of the thermally-crosslinkable ceramic green sheet according to claim 23.

26. A photo-crosslinked ceramic green sheet obtained by light irradiation treatment of the photo-crosslinkable ceramic green sheet according to claim 24.

27. A crosslinkable powder coating comprising the crosslinkable polyvinyl acetal porous powder according to claim 1.

**Patentansprüche**

1. Vernetzbares poröses Polyvinylacetalpulver, welches vernetzbares Polyvinylacetal umfasst, das eine Monomereinheit enthält, die eine vernetzbare funktionelle Gruppe aufweist, welche daran durch mindestens eine Bindung gebunden ist, die aus der Gruppe ausgewählt ist, bestehend aus einer Esterbindung, einer Etherbindung und einer Urethanbindung, und die in Bezug auf die Gesamtheit der -$CH_2$-CH-Einheiten in der Hauptkette von Polyvinylacetal einen Anteil der vernetzbaren funktionellen Gruppe von 0,3 bis 20 Mol-% aufweist, wobei
das vernetzbare poröse Polyvinylacetalpulver aus aggregierten Partikeln (sekundären Partikeln) gebildet wird, in denen primäre Partikel agglomerieren, und
das vernetzbare poröse Polyvinylacetalpulver eine durchschnittliche Partikelgröße der sekundären Partikel von 30 bis 10000 $\mu$m, die durch eine Messung unter Verwendung eines Laserbeugungsverfahrens bestimmt wird, und eine Rohdichte von 0,12 bis 0,50 g/ml aufweist, die auf Grundlage von JIS K6721 bestimmt wird.

2. Vernetzbares poröses Polyvinylacetalpulver nach Anspruch 1, wobei
die vernetzbare funktionelle Gruppe mindestens eine funktionelle Gruppe ist, die aus der Gruppe ausgewählt ist, bestehend aus einer funktionellen Gruppe, einschließend eine ethylenisch ungesättigte Bindung, einer funktionellen Gruppe, einschließend eine Carboxylgruppe, und einer funktionellen Gruppe, einschließend eine Carboxylatgruppe.

3. Vernetzbares poröses Polyvinylacetalpulver nach Anspruch 2, wobei
die funktionelle Gruppe, einschließend eine ethylenisch ungesättigte Bindung, eine Vinylgruppe, eine Methylvinylgruppe, eine Styrylgruppe, eine Carboxyvinylgruppe, eine (Meth)acryloyloxy-$C_{1-6}$-alkylgruppe oder eine (Meth)acryloyloxyhydroxy-$C_{1-6}$-alkylgruppe ist.

4. Vernetzbares poröses Polyvinylacetalpulver nach Anspruch 1, wobei
die Monomereinheit, die eine vernetzbare funktionelle Gruppe aufweist, welche daran durch eine Esterbindung gebunden ist, eine chemische Struktur aufweist, bei der eine Hydroxylgruppe in einer Vinylalkoholeinheit und eine Carbonsäureverbindung, die eine vernetzbare funktionelle Gruppe aufweist, verestert sind.

5. Vernetzbares poröses Polyvinylacetalpulver nach Anspruch 4, wobei
die Carbonsäureverbindung, die eine vernetzbare funktionelle Gruppe aufweist, (Meth)acrylsäure und/oder Zimtsäure ist.

6. Vernetzbares poröses Polyvinylacetalpulver nach Anspruch 4, wobei
die Carbonsäureverbindung, die eine vernetzbare funktionelle Gruppe aufweist, mindestens eine ist, die aus der Gruppe ausgewählt ist, bestehend aus Maleinsäure, Itaconsäure, Succinylsäure, 1,2-Cyclohexandicarbonsäure, Glutarsäure, Phthalsäure und Trimellitsäure.

7. Vernetzbares poröses Polyvinylacetalpulver nach Anspruch 1, wobei
die Monomereinheit, die eine vernetzbare funktionelle Gruppe aufweist, welche daran durch eine Esterbindung gebunden ist, eine chemische Struktur aufweist, bei der eine Monomereinheit, die eine Carboxylgruppe aufweist, und eine Epoxidverbindung, die eine vernetzbare funktionelle Gruppe aufweist, verestert sind.

8. Vernetzbares poröses Polyvinylacetalpulver nach Anspruch 1, wobei
die Monomereinheit, die eine vernetzbare funktionelle Gruppe aufweist, welche daran durch eine Etherbindung gebunden ist, eine chemische Struktur aufweist, bei der eine Hydroxylgruppe in einer Vinylalkoholeinheit und eine Epoxidverbindung, die eine vernetzbare funktionelle Gruppe aufweist, umgesetzt werden, um eine Etherbindung zu bilden.

9. Vernetzbares poröses Polyvinylacetalpulver nach Anspruch 1, wobei
die Monomereinheit, die eine vernetzbare funktionelle Gruppe aufweist, welche daran durch eine Urethanbindung gebunden ist, eine chemische Struktur aufweist, bei der eine Hydroxylgruppe in einer Vinylalkoholeinheit und eine Isocyanatverbindung, die eine vernetzbare funktionelle Gruppe aufweist, umgesetzt werden, um eine Urethanbindung zu bilden.

10. Vernetzbares poröses Polyvinylacetalpulver nach Anspruch 1, wobei
die primären Partikel eine durchschnittliche Partikelgröße von 10 $\mu$m oder weniger aufweisen.

11. Vernetzbares poröses Polyvinylacetalpulver nach Anspruch 1, wobei
das vernetzbare Polyvinylacetal eine Carboxylgruppe und/oder eine Carboxylatgruppe mit einem Verhältnis enthält, das durch die Formel (1) angegeben wird:

$$0 \leq [\text{Menge von Carboxylatgruppen/(Gesamtmenge von Carboxylgruppen und Carboxylatgruppen)}] \leq 0{,}3 \dots (1).$$

12. Verfahren zum Herstellen eines vernetzbaren porösen Polyvinylacetalpulvers, das den Schritt umfasst des: Umsetzens eines porösen Polyvinylacetalpulvers, das eine Carboxylgruppe und/oder eine Carboxylatgruppe aufweisen kann, mit einer Verbindung, die eine vernetzbare funktionelle Gruppe aufweist, wobei
die Reaktion in dem Zustand ausgeführt wird, in dem das poröse Polyvinylacetalpulver in einem Lösungsmittel dispergiert ist, in dem die Verbindung, die eine vernetzbare funktionelle Gruppe aufweist, löslich ist, das poröse Polyvinylacetalpulver und das vernetzbare poröse Polyvinylacetalpulver jedoch unlöslich sind, und
ein Acetalisierungsgrad des porösen Polyvinylacetalpulvers 40 bis 85 Mol-% beträgt.

**13.** Verfahren zum Herstellen des vernetzbaren porösen Polyvinylacetalpulvers nach Anspruch 12, wobei das poröse Polyvinylacetalpulver eine durchschnittliche sekundäre Partikelgröße von 30 bis 10000 μm, die durch eine Messung unter Verwendung eines Laserbeugungsverfahrens bestimmt wird, und eine Rohdichte von 0,12 bis 0,50 g/ml aufweist, die auf Grundlage von JIS K6721 bestimmt wird.

**14.** Verfahren zum Herstellen des vernetzbaren porösen Polyvinylacetalpulvers nach Anspruch 12, wobei bei der Reaktion die restliche Hydroxylgruppe des porösen Polyvinylacetalpulvers, das eine Carboxylgruppe und/oder Carboxylatgruppe aufweisen kann, mit einer Carbonsäureverbindung, die eine vernetzbare funktionelle Gruppe aufweist, oder einem Derivat davon umgesetzt wird.

**15.** Verfahren zum Herstellen des vernetzbaren porösen Polyvinylacetalpulvers nach Anspruch 14, wobei die Carbonsäureverbindung, die eine vernetzbare funktionelle Gruppe aufweist, oder das Derivat mindestens eine(s) ist, die bzw. das aus der Gruppe ausgewählt ist, bestehend aus (Meth)acrylsäurechlorid, (Meth)acrylsäureanhydrid, Zimtsäurechlorid, Zimtsäureanhydrid, Maleinsäureanhydrid, Itaconsäureanhydrid, Succinylsäureanhydrid, (1,2-Cyclohexandicarbonsäure)anhydrid, Glutarsäureanhydrid, Phthalsäureanhydrid und Trimellitsäureanhydrid.

**16.** Verfahren zum Herstellen des vernetzbaren porösen Polyvinylacetalpulvers nach Anspruch 14, wobei die Reaktionstemperatur -10 bis 60 °C ist.

**17.** Verfahren zum Herstellen des vernetzbaren porösen Polyvinylacetalpulvers nach Anspruch 12, wobei bei der Reaktion die Carboxylgruppe und/oder die Carboxylatgruppe in dem porösen Polyvinylacetalpulver, das die Carboxylgruppe und/oder die Carboxylatgruppe aufweist, mit einer Epoxidverbindung umgesetzt wird, die eine vernetzbare funktionelle Gruppe aufweist.

**18.** Verfahren zum Herstellen des vernetzbaren porösen Polyvinylacetalpulvers nach Anspruch 12, wobei bei der Reaktion die restliche Hydroxylgruppe des porösen Polyvinylacetalpulvers, das eine Carboxylgruppe und/oder Carboxylatgruppe aufweisen kann, mit einer Epoxidverbindung umgesetzt wird, die eine vernetzbare funktionelle Gruppe aufweist.

**19.** Verfahren zum Herstellen des vernetzbaren porösen Polyvinylacetalpulvers nach Anspruch 12, wobei bei der Reaktion die restliche Hydroxylgruppe des porösen Polyvinylacetalpulvers, das eine Carboxylgruppe und/oder Carboxylatgruppe aufweisen kann, mit einer Isocyanatverbindung umgesetzt wird, die eine vernetzbare funktionelle Gruppe aufweist.

**20.** Vernetzbares Keramikbindemittel, welches das vernetzbare poröse Polyvinylacetalpulver nach Anspruch 1 umfasst.

**21.** Thermisch vernetzbare Keramikzusammensetzung, die das vernetzbare poröse Polyvinylacetalpulver nach Anspruch 1 umfasst.

**22.** Photovernetzbare Keramikzusammensetzung, die das vernetzbare poröse Polyvinylacetalpulver nach Anspruch 1 umfasst.

**23.** Thermisch vernetzbare Keramikgrünschicht, die aus der thermisch vernetzbaren Keramikzusammensetzung nach Anspruch 21 erhalten wird.

**24.** Photovernetzbare Keramikgrünschicht, die aus der photovernetzbaren Keramikzusammensetzung nach Anspruch 22 erhalten wird.

**25.** Thermisch vernetzte Keramikgrünschicht, die durch eine Wärmebehandlung der thermisch vernetzbaren Keramikgrünschicht nach Anspruch 23 erhalten wird.

**26.** Photovernetzte Keramikgrünschicht, die durch eine Lichtbestrahlungsbehandlung der photovernetzbaren Keramikgrünschicht nach Anspruch 24 erhalten wird.

**27.** Vernetzbare Pulverbeschichtung, die das vernetzbare poröse Polyvinylacetalpulver nach Anspruch 1 umfasst.

**Revendications**

1. Poudre poreuse de polyvinylacétal réticulable, comprenant du polyvinylacétal réticulable contenant une unité monomère présentant un groupe fonctionnel réticulable lié à celle-ci par au moins une liaison choisie dans le groupe consistant en une liaison ester, une liaison éther et une liaison uréthane, et présentant une teneur du groupe fonctionnel réticulable de 0,3 à 20 % en mol par rapport au total d'unités -CH$_2$-CH-dans la chaîne principale de polyvinylacétal, dans laquelle
la poudre poreuse de polyvinylacétal réticulable est formée de particules agrégées (particules secondaires) dans laquelle des particules primaires s'agglomèrent, et
la poudre poreuse de polyvinylacétal réticulable présente une taille moyenne de particules des particules secondaires de 30 à 10 000 $\mu$m déterminée par une mesure utilisant un procédé de diffraction au laser et une masse volumique apparente de 0,12 à 0,50 g/ml déterminée sur la base de JIS K6721.

2. Poudre poreuse de polyvinylacétal réticulable selon la revendication 1, dans laquelle
le groupe fonctionnel réticulable est au moins un groupe fonctionnel choisi dans le groupe consistant en un groupe fonctionnel incluant une liaison éthyléniquement insaturée, un groupe fonctionnel incluant un groupe carboxyle, et un groupe fonctionnel incluant un groupe carboxylate.

3. Poudre poreuse de polyvinylacétal réticulable selon la revendication 2, dans laquelle
le groupe fonctionnel incluant une liaison éthyléniquement insaturée est un groupe vinyle, un groupe méthylvinyle, un groupe styryle, un groupe carboxyvinyle, un groupe (méth)acryloyloxy(alkyle en C$_{1-6}$), ou un groupe (méth)acryloyloxyhydroxy(alkyle en C$_{1-6}$).

4. Poudre poreuse de polyvinylacétal réticulable selon la revendication 1, dans laquelle
l'unité monomère présentant un groupe fonctionnel réticulable lié à celle-ci par une liaison ester présente une structure chimique dans laquelle un groupe hydroxyle dans une unité alcool vinylique et un composé d'acide carboxylique présentant un groupe fonctionnel réticulable sont estérifiés.

5. Poudre poreuse de polyvinylacétal réticulable selon la revendication 4, dans laquelle
le composé d'acide carboxylique présentant un groupe fonctionnel réticulable est l'acide (méth)acrylique et/ou l'acide cinnamique.

6. Poudre poreuse de polyvinylacétal réticulable selon la revendication 4, dans laquelle
le composé d'acide carboxylique présentant un groupe fonctionnel réticulable est au moins un choisi dans le groupe consistant en acide maléique, acide itaconique, acide succinique, acide 1,2-cyclohexane dicarboxylique, acide glutarique, acide phtalique, et acide trimellitique.

7. Poudre poreuse de polyvinylacétal réticulable selon la revendication 1, dans laquelle
l'unité monomère présentant un groupe fonctionnel réticulable lié à celle-ci par une liaison ester présente une structure chimique dans laquelle une unité monomère présentant un groupe carboxyle et un composé époxy présentant un groupe fonctionnel réticulable sont estérifiés.

8. Poudre poreuse de polyvinylacétal réticulable selon la revendication 1, dans laquelle
l'unité monomère présentant un groupe fonctionnel réticulable lié à celle-ci par une liaison éther présente une structure chimique dans laquelle un groupe hydroxyle dans une unité alcool vinylique et un composé époxy présentant un groupe fonctionnel réticulable réagissent pour former une liaison éther.

9. Poudre poreuse de polyvinylacétal réticulable selon la revendication 1, dans laquelle
l'unité monomère présentant un groupe fonctionnel réticulable lié à celle-ci par une liaison uréthane présente une structure chimique dans laquelle un groupe hydroxyle dans une unité alcool vinylique et un composé isocyanate présentant un groupe fonctionnel réticulable réagissent pour former une liaison uréthane.

10. Poudre poreuse de polyvinylacétal réticulable selon la revendication 1, dans laquelle
les particules primaires présentent une taille moyenne de particule de 10 $\mu$m ou inférieure.

11. Poudre poreuse de polyvinylacétal réticulable selon la revendication 1, dans laquelle
le polyvinylacétal réticulable contient un groupe carboxyle et/ou un groupe carboxylate avec un rapport donné par la formule (1) :

$$0 \leq [\text{quantité de groupes carboxylate/(quantité totale de groupes carboxyle et groupes carboxylates)}] \leq 0,3...(1).$$

12. Procédé de production d'une poudre poreuse de polyvinylacétal réticulable comprenant l'étape de : réaction d'une poudre poreuse de polyvinylacétal qui peut présenter un groupe carboxyle et/ou un groupe carboxylate avec un composé présentant un groupe fonctionnel réticulable, dans lequel
la réaction est réalisée dans l'état où la poudre poreuse de polyvinylacétal est dispersée dans un solvant dans lequel le composé présentant un groupe fonctionnel réticulable est soluble, et la poudre poreuse de polyvinylacétal et la poudre poreuse de polyvinylacétal réticulable sont insolubles, et
un degré d'acétalisation de la poudre poreuse de polyvinylacétal est de 40 à 85 % en mol.

13. Procédé de production de la poudre poreuse de polyvinylacétal réticulable selon la revendication 12, dans lequel la poudre poreuse de polyvinylacétal présente une taille moyenne de particules secondaires de 30 à 10 000 µm déterminée par une mesure en utilisant un procédé de diffraction au laser et une masse volumique apparente de 0,12 à 0,50 g/ml, déterminée sur la base de JIS K6721.

14. Procédé de production de la poudre poreuse de polyvinylacétal réticulable selon la revendication 12, dans lequel dans la réaction, le groupe hydroxyle résiduel de la poudre poreuse de polyvinylacétal qui peut présenter un groupe carboxyle et/ou un groupe carboxylate réagit avec un composé d'acide carboxylique présentant un groupe fonctionnel réticulable ou un dérivé de celui-ci.

15. Procédé de production de la poudre poreuse de polyvinylacétal réticulable selon la revendication 14, dans lequel le composé d'acide carboxylique présentant un groupe fonctionnel réticulable ou le dérivé est au moins un choisi dans le groupe consistant en chlorure d'acide (méth)acrylique, anhydride d'acide (méth)acrylique, chlorure d'acide cinnamique, anhydride d'acide cinnamique, anhydride d'acide maléique, anhydride d'acide itaconique, anhydride d'acide succinique, anhydride d'acide 1,2-cyclohexane-dicarboxylique, anhydride d'acide glutarique, anhydride d'acide phtalique, et anhydride d'acide trimellitique

16. Procédé de production de la poudre poreuse de polyvinylacétal réticulable selon la revendication 14, dans lequel la température de réaction est de -10 à 60°C.

17. Procédé de production de la poudre poreuse de polyvinylacétal réticulable selon la revendication 12, dans lequel dans la réaction, le groupe carboxyle et/ou le groupe carboxylate dans la poudre poreuse de polyvinylacétal présentant le groupe carboxyle et/ou le groupe carboxylate réagit avec un composé époxy présentant un groupe fonctionnel réticulable.

18. Procédé de production de la poudre poreuse de polyvinylacétal réticulable selon la revendication 12, dans lequel dans la réaction, le groupe hydroxyle résiduel de la poudre poreuse de polyvinylacétal qui peut présenter un groupe carboxyle et/ou un groupe carboxylate réagit avec un composé époxy présentant un groupe fonctionnel réticulable.

19. Procédé de production de la poudre poreuse de polyvinylacétal réticulable selon la revendication 12, dans lequel dans la réaction, le groupe hydroxyle résiduel de la poudre poreuse de polyvinylacétal qui peut présenter un groupe carboxyle et/ou un groupe carboxylate réagit avec un composé isocyanate présentant un groupe fonctionnel réticulable.

20. Liant céramique réticulable comprenant la poudre poreuse de polyvinylacétal réticulable selon la revendication 1.

21. Composition céramique thermiquement réticulable comprenant la poudre poreuse de polyvinylacétal réticulable selon la revendication 1.

22. Composition céramique photoréticulable comprenant la poudre poreuse de polyvinylacétal réticulable selon la revendication 1.

23. Feuille céramique crue thermiquement réticulable obtenue à partir de la composition céramique thermiquement réticulable selon la revendication 21.

24. Feuille céramique crue photoréticulable obtenue à partir de la composition céramique photoréticulable selon la revendication 22.

25. Feuille céramique crue thermiquement réticulée obtenue par traitement thermique de la feuille céramique crue thermiquement réticulable selon la revendication 23.

26. Feuille céramique crue photoréticulée obtenue par traitement par irradiation de lumière de la feuille céramique crue photoréticulable selon la revendication 24.

27. Revêtement de poudre réticulable comprenant la poudre poreuse de polyvinylacétal réticulable selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60008043 B
- JP 60030331 B
- JP 2004339370 A
- JP 2004269690 A
- JP 9249712 A
- JP 10292013 A
- JP 1198605 A
- JP 5039335 A
- US 2413275 A
- US 5055518 A
- US 20060170136 A
- JP 2005275071 A